# EUROPEAN PATENT APPLICATION

(11) **EP 4 604 290 A1**
(43) Date of publication of application: **20.08.2025**
(21) Application number: 22968279.4
(22) Date of filing: 16.12.2022
(51) Int. Cl.: H01M 50/244, H01M 50/24, F16K 17/00

(54) **LIQUID DISCHARGE MECHANISM, BATTERY CASE, BATTERY, AND ELECTRIC DEVICE**

(71) Applicant: Contemporary Amperex Technology Co., Limited, Ningde, Fujian 352100 (CN)
(72) Inventor: HUANG, Jiawei, Ningde, Fujian 352100 (CN); CHEN, Zhiming, Ningde, Fujian 352100 (CN); PAN, Xin, Ningde, Fujian 352100 (CN); LIU, Yifei, Ningde, Fujian 352100 (CN)
(74) Representative: Ran, Handong
(86) International application number: PCT/CN2022/139760
(87) International publication number: WO 2024/124575

(57) **Abstract**

A liquid discharge mechanism, a battery case, a battery, and an electric device. The liquid discharge mechanism comprises: a valve (10), the valve (10) being configured with an accommodating cavity (11), a liquid inlet portion (12) and an opening portion (13), and the liquid inlet portion (12) and the opening portion (13) being both in communication with the accommodating cavity (11); a cap assembly (20) movably arranged at the opening portion (13); and an actuator assembly (30) arranged in the accommodating cavity (11), the actuator assembly (30) being configured to actuate in response to a liquid entering the accommodating cavity (11) via the liquid inlet portion (12) to move the cap assembly (20), so as to at least partially open the opening portion (13).

## Description

### TECHNICAL FIELD

The present invention relates to the technical field of batteries, and more particularly to a liquid drainage mechanism, a battery box, a battery and an electrical apparatus.

### BACKGROUND

Secondary batteries, especially lithium-ion batteries, have the advantages of high voltage, large specific energy, long cycle life, green and pollution-free, wide operating temperature range, small self-discharge, etc. They are widely used in portable electronic devices and power devices of large-scale new energy electric vehicles, and are of great significance to solving human environmental pollution and energy crisis. With the widespread application of lithium-ion batteries, the safety performance of the batteries has become an issue that users pay close attention to.

### SUMMARY OF THE INVENTION

In one aspect of the present disclosure, provided is a liquid drainage mechanism, including: a valve body, a cover assembly and an actuation assembly. The valve body is provided with an accommodating cavity, a liquid intake portion and an opening portion, the liquid intake portion and the opening portion being both in communication with the accommodating cavity; the cover assembly is movably disposed on the opening portion; and the actuation assembly is disposed in the accommodating cavity, and configured to be actuated in response to a liquid entering the accommodating cavity through the liquid intake portion, so as to move the cover assembly to at least partially open the opening portion.

In this embodiment, the actuation assembly that can be actuated in response to the liquid is provided in the accommodating cavity of the valve body, so that when the liquid enters the accommodating cavity through the liquid intake portion, the actuation assembly is actuated to move the cover assembly to at least partially open the opening portion, and the liquid in the accommodating cavity is thus discharged outwardly from the opening portion to implement an effective liquid drainage function.

In some embodiments, the cover assembly includes an action surface, and the actuation assembly is configured to push the action surface upon actuation, so as to move the cover assembly to at least partially open the opening portion.

By causing the actuation assembly to apply a thrust force to the action surface of the cover assembly to push the action surface, the cover assembly is displaced under the action of the thrust force, so as to at least partially open the opening portion. In this way, the reliability of opening the opening portion when the actuation assembly is actuated can be improved.

In some embodiments, the actuation assembly is configured to push the action surface upon actuation, so as to move the cover assembly in a direction away from the opening portion.

When the action surface of the cover assembly is pushed by the actuation assembly, the cover assembly moves in the direction away from the opening portion, so that a liquid drainage channel for the liquid to flow out is easily and quickly formed between the opening portion and the cover assembly, thereby increasing the liquid drainage speed, and also facilitating the reduction of the space occupied by the liquid drainage mechanism on a plane perpendicular to the direction of the cover assembly.

In some embodiments, the actuation assembly includes a deformable member configured to expand and deform after contact with the liquid.

The deformable member expands and deforms after contact with the liquid, so as to create a driving effect to move the cover assembly through the expanded size, and this method can respond more quickly to the liquid entering the accommodating cavity through the liquid intake portion, increasing the reaction speed of the liquid drainage mechanism.

In some embodiments, the deformable member is configured to absorb the liquid and expand.

With its own ability to absorb the liquid, the deformable member can absorb the liquid while in contact with the liquid, and naturally expand outwardly to increase the volume, thereby being more reliably actuated when encountering the liquid.

In some embodiments, the deformable member includes a groove and/or a through hole for communicating the liquid intake portion with the opening portion.

Considering that the deformable member will occupy a certain space in the accommodating cavity after expansion and deformation, in order to reduce the possibility of the deformable member interfering with the liquid drainage, a groove and/or a through hole for communicating the liquid intake portion with the opening portion is provided on the deformable member, so that the liquid can be discharged outwardly smoothly and continuously after the deformable member expands and deforms.

In some embodiments, there are a plurality of deformable members which are configured in a sheet shape, the plurality of sheet-shaped deformable members being stacked in a thickness direction thereof.

The plurality of sheet-shaped deformable members can increase the contact area between the deformable members and the liquid, to improve the sensitivity of responding to the liquid, and the stacking of the plurality of sheet-shaped deformable members in the thickness direction itself can more effectively control the expansion direction of the deformable members, to cause them to expand and deform in the desired direction.

In some embodiments, the deformable member includes an electrical insulating paper. The deformable member in the form of an electrical insulating paper can obtain a higher durability.

In some embodiments, a volume of an alcoholic liquid that can be absorbed by the deformable member per unit volume is a first absorption amount, and a volume of water that can be absorbed by the deformable member per unit volume is a second absorption amount, the first absorption amount being greater than the second absorption amount.

By using a deformable member that absorbs a greater volume of alcoholic liquid than water, the liquid drainage mechanism can obtain a selective liquid drainage function, thereby meeting the main demand for discharging the alcoholic liquid.

**In** some embodiments, a volume change ratio of the deformable member when absorbing a unit volume of alcoholic liquid is defined as a first volume deformation ratio, and a volume deformation ratio of the deformable member when absorbing a unit volume of water is defined as a second volume deformation ratio, the first volume deformation ratio being greater than the second volume deformation ratio.

By using a deformable member that absorbs a greater volume change ratio of alcoholic liquid than water, the liquid drainage mechanism can obtain a selective liquid drainage function, thereby meeting the main demand for discharging the alcoholic liquid.

**In** some embodiments, the liquid drainage mechanism further includes a connection structure connected to the valve body and the cover assembly, the connection structure being configured to keep the cover assembly covering the opening portion when the actuation assembly is not actuated.

By providing a connection structure connected to the valve body and the cover assembly, the actuation assembly can, when not actuated, maintain the state in which the cover assembly covers the opening portion, to meet the requirements for closing the region where the liquid drainage mechanism is mounted, and the response sensitivity of the liquid drainage mechanism can be improved.

In some embodiments, the connection structure includes an elastic connection member configured to elastically deform when the cover assembly opens the opening portion.

When the actuation assembly is actuated, the cover assembly moves to open the opening portion, and the elastic connection member enables the cover assembly to return to the opening portion when the actuation assembly returns to the unactuated state, thereby enabling the liquid drainage mechanism to be reused. Moreover, the elastic connection member can cause the cover assembly to more stably keep covering the opening portion when the actuation assembly is not actuated, thereby maintaining the internal sealing of the liquid drainage mechanism.

In some embodiments, the elastic connection member is configured as a compression spring, the valve body includes a first pressing portion, the cover assembly includes a second pressing portion, the first pressing portion and the second pressing portion are respectively located at two ends of the elastic connection member, and the cover assembly is configured, when separated from the opening portion, to cause the second pressing portion to move toward the first pressing portion and compress the elastic connection member.

Since the compression spring is arranged between the first pressing portion of the valve body and the second pressing portion of the cover assembly, the compression spring can stably press the cover assembly against the opening portion of the valve body by means of an elastic force. When the cover assembly is separated from the opening portion, the compression spring is compressed, and its elastic force after compression can quickly restore the cover assembly when the actuation assembly is not actuated.

In some embodiments, the second pressing portion includes a pressing plate and a limiting rod, the first pressing portion includes a mounting hole, the pressing plate is connected to the limiting rod, the limiting rod is movably disposed through the mounting hole, and the elastic connection member is sleeved on the limiting rod and clamped between the pressing plate and the second pressing portion.

The first pressing portion includes a pressing plate and a limiting rod passing through the mounting hole in the second pressing portion, and the elastic connection member is sleeved on the limiting rod and clamped between the pressing plate and the second pressing portion, so that when the second pressing portion and the pressing plate move toward each other, the length of the elastic connection member is compressed, and the elastic connection member makes the second pressing portion and the pressing plate tend to move away from each other to implement rapid restoring of the cover assembly.

In some embodiments, the cover assembly further includes a cover body, and the limiting rod is removably connected to the cover body.

The cover assembly adopts a structure in which the cover body is removable from the limiting rod, so that the cover body and the limiting rod may be manufactured separately and then assembled, thereby reducing the difficulty of manufacturing and also facilitating component replacement and maintenance.

In some embodiments, the elastic connection member is located in the accommodating cavity.

The arrangement of the elastic connection member in the accommodating cavity of the valve body can reduce the space occupied by the liquid drainage mechanism and reduce the risk of other structures outside the liquid drainage mechanism interfering with the elastic connection member.

In some embodiments, the elastic connection member includes a disc spring, the valve body includes a limiting protrusion disposed spaced apart on a wall of the accommodating cavity, and the elastic connection member is clamped between the limiting protrusion and the cover assembly.

The disc spring located between the limiting protrusion and the cover assembly provides an elastic force to the cover assembly, to cause the cover assembly to cover the opening portion of the valve body, so that less space can be occupied while satisfying the elastic force, and a smaller-sized liquid drainage mechanism can be achieved.

In some embodiments, the elastic connection member includes a disc spring, and the valve body includes a first limiting protrusion and a second limiting protrusion disposed spaced apart from each other on a wall of the accommodating cavity, and the elastic connection member is clamped between the first limiting protrusion and the second limiting protrusion.

The disc spring can be stably held by the first limiting protrusion and the second limiting protrusion disposed spaced apart from each other, so that the elastic connection member can reliably provide elastic force, so that less space can be occupied while satisfying the elastic force, and a smaller-sized liquid drainage mechanism can be achieved.

In some embodiments, the cover assembly further includes a cover body, the cover body having an extension section and a hook section, wherein the extension section extends from the cover body toward the accommodating cavity, and the hook section is located on the extension section and is configured to abut against an end face of the elastic connection member that faces away from the opening portion.

The hook section can stably abut against the end face of the elastic connection member through the elasticity of the extension section, and is easy to assemble.

In some embodiments, the elastic connection member includes a tension spring, the valve body includes a first fixing portion, the cover assembly includes a second fixing portion, and two ends of the elastic connection member are respectively connected to the first fixing portion and the second fixing portion, such that when the cover assembly is separated from the opening portion, the second fixing portion can move in a direction away from the first fixing portion to stretch the elastic connection member.

The tension spring provides an elastic force to keep the cover assembly at the opening portion. When the actuation assembly is actuated, the tension spring is stretched, so that the elastic tension force is used for restoring when the actuation assembly is not actuated.

In some embodiments, the elastic connection member is located in the accommodating cavity, the actuation assembly is provided with a through hole, and the elastic connection member is disposed through the through hole.

The elastic connection member is disposed in the through hole of the actuation assembly, so that the elastic connection member and the actuation assembly can share a height space, contributing to achieving a smaller-sized liquid drainage mechanism.

In some embodiments, the first fixing portion is located on a bottom wall of the accommodating cavity, the second fixing portion is located on a surface of the cover assembly that faces the accommodating cavity, and the first fixing portion and the second fixing portion are disposed opposite to each other in a penetration direction of the through hole.

The first fixing portion and the second fixing portion are connected to the elastic connection member in the penetration direction of the through hole, so that interference is less likely to occur during relative movement between the elastic connection member and the actuation assembly, and the liquid drainage mechanism thus can reliably implement the liquid drainage function.

In some embodiments, the liquid intake portion includes two liquid inlets disposed spaced apart from each other, the first fixing portion is configured as a partition strip for separating the two liquid inlets, the elastic connection member is provided with a first hook at one end close to the first fixing portion, and the first hook hooks the partition strip to connect the valve body to the elastic connection member.

The two liquid intake holes disposed spaced apart from each other can not only implement liquid intake by means of the liquid inlets, but can also use the partition strip between the two liquid inlets to connect the first hook at the end of the elastic connection member, so that the elastic connection member can be easily mounted, and the liquid intake function of the valve body can also be provided.

In some embodiments, the second fixing portion is formed by protruding from the surface of the cover assembly that faces the accommodating cavity, a second hook is provided at one end of the elastic connection member close to the second fixing portion, the second fixing portion is provided with a hanging hole, and the second hook hooks the hanging hole to connect the cover assembly to the elastic connection member.

A protrusion on the cover assembly is provided with a hook for connection with the second hook at the end of the elastic connection member, so that the elastic connection member can be easily mounted.

In some embodiments, the liquid drainage mechanism further includes a fixing member configured to fix the valve body to a target member.

The valve body is fixed to the target member via the fixing member, so that the valve body can more reliably implement the liquid drainage function at the location of the target member.

In some embodiments, an outer wall of the valve body includes a threaded section extending in a first direction, and a mating portion formed by extending a preset size along a plane perpendicular to the first direction, the mating portion is located at one end of the threaded section in a screwing direction, and the fixing member includes a fixing nut configured to be locked to the outer wall by means of the threads and form a clamping space together with the mating portion.

The threaded section of the valve body is threadedly connected to the fixing nut, and the mating portion and the fixing nut jointly form a clamping space for clamping the target member. This threaded connection method makes assembly and disassembly very easy and quick, and can be adapted to target members of different thicknesses. Moreover, it is easy to implement torque monitoring during the mounting, which can improve the reliability of the fixed connection.

In some embodiments, the opening portion includes a first groove, a first elastic sealing member is provided in the first groove, and at least a part of the cover assembly is located in the first groove when the actuation assembly is not actuated.

Since at least a part of the cover assembly is located in the first groove when the actuation assembly is not actuated, the first elastic sealing member in the first groove of the opening portion can improve the sealing between the cover assembly and the opening portion.

In some embodiments, the cover assembly has an energy-absorbing structure. By providing an energy-absorbing structure on the cover assembly, energy can be absorbed when the cover assembly disposed on the outer side is scratched, squeezed or collided by other structures, thereby preventing or reducing damage to the liquid drainage mechanism and reducing the risk of failure of the liquid drainage mechanism.

In some embodiments, the energy-absorbing structure includes a buffer cavity located in the cover assembly. The energy-absorbing structure can use a buffer cavity provided in the cover assembly, which can effectively absorb energy through the deformation of the buffer cavity when the cover assembly is squeezed or impacted.

In some embodiments, the cover assembly includes: a cover body and a baffle, the baffle being disposed on a side of the cover body away from the valve body and connected to or integrally formed with the cover body; wherein the buffer cavity is located between the cover body and the baffle. The cover assembly covers the opening portion by means of the cover body, provides protection to the cover body by means of the baffle, and absorbs energy by means of the buffer cavity between the baffle and the cover body.

In some embodiments, the cover body includes: a cover plate, a first cover plate surface on a side of the cover plate adjacent to the baffle having an inner recess; wherein a baffle surface on a side of the baffle adjacent to the cover plate and the inner recess enclose the buffer cavity. The cover plate of the cover body may form an inner recess on the surface, and the buffer cavity is enclosed by the inner recess and the baffle surface, so that when the baffle is squeezed or impacted, it can first deform in the buffer cavity, thereby reducing the energy transmitted to the baffle.

In some embodiments, the wall of the accommodating cavity is provided with a guide groove, and the cover body further includes a guide post formed by protruding toward the accommodating cavity, the guide post mates with the guide groove for guidance when the cover body covers the opening portion, so as to limit a rotation angle of the cover plate relative to the valve body. The cover body includes the cover plate and the guide post protruding toward the accommodating cavity, and the guide post can slide in the guide groove on the wall of the accommodating cavity to prevent the cover body from rotating in the valve body when the actuation assembly is actuated, so as not to affect the liquid drainage process.

In some embodiments, the baffle surface is flat. The use of the baffle with a flat baffle surface can reduce the difficulty of manufacturing and machining the baffle, and facilitate the use of a harder material to resist external scratches, squeezes or collisions.

In some embodiments, the material of the baffle has a higher strength than the material of the cover body. The use of a higher-strength material to manufacture the baffle can improve the ability of the cover assembly of the liquid drainage mechanism to resist external scratches, squeezes or collisions, whereas the use of a lower-strength material to manufacture the cover body can facilitate the formation of a more complex structural form is, for example, forming a structure of the cover body that includes a cover plate having an inner recess, and a guide post.

In some embodiments, an outer wall of the valve body includes a mating portion formed by extending a preset size along a plane perpendicular to a thickness direction of the baffle, the mating portion includes a first stepped hole section and a second stepped hole section, a cross-sectional size of the second stepped hole section is greater than a cross-sectional size of the first stepped hole section, and the cover plate is configured to be at least partially located in the second stepped hole section when the actuation assembly is not actuated, such that a second cover plate surface on a side of the cover plate adjacent to the actuation assembly sealingly mates with a stepped surface between the first stepped hole section and the second stepped hole section.

The cover body is accommodated by the stepped hole, and the second cover plate surface sealingly mates with the stepped surface, so that the sealingly mating parts can be shielded by the second stepped hole section, reducing the risk of external impurities entering the sealingly mating parts.

In some embodiments, the baffle has a liquid drainage hole penetrating in a thickness direction of the cover assembly, the liquid drainage hole being located on an outer circumferential side of the cover plate.

The baffle is provided with the liquid drainage hole penetrating the baffle, and the liquid drainage hole is distributed on the outer circumferential side of the cover plate, so that liquid can be discharged outwardly through the liquid drainage hole in the baffle when the actuation assembly is actuated.

In some embodiments, a plurality of liquid drainage holes are provided, and the plurality of liquid drainage holes are circumferentially arranged at intervals on the outer circumferential side of the cover plate.

The arrangement of the plurality of liquid drainage holes at intervals in the circumferential direction can make the liquid drainage more uniform, and even if there are external impurities blocking some of the liquid drainage holes, liquid drainage can be implemented through the other liquid drainage holes, so that the normal liquid drainage function can be improved.

In some embodiments, the cover assembly further includes: an engagement ring disposed at an outer edge of the baffle and connected to or integrally formed with the baffle; wherein the engagement ring has a flange protruding from the baffle in a direction toward the actuation assembly.

The flange of the engagement ring disposed at the outer edge of the baffle can create a shielding effect in the radial direction, which can reduce the blocking of the cover assembly and the influence on the sealing caused by external impurities to a certain extent.

In some embodiments, an outer wall of the valve body includes a mating portion formed by extending a preset size along a plane perpendicular to a thickness direction of the baffle, and the flange is located outside the mating portion.

By disposing the flange outside the mating portion, the possibility of the valve body being laterally collided by external structures can be reduced by shielding the valve body, and it is also possible to block some external impurities to reduce the risk of the impurities blocking the liquid drainage channel.

In some embodiments, the flange has a liquid drainage notch. The liquid drainage function can be implemented by providing the liquid drainage notch on the flange.

In some embodiments, a plurality of liquid drainage notches are provided, and the plurality of liquid drainage notches are circumferentially arranged at intervals on the flange.

The arrangement of the plurality of liquid drainage notches at intervals in the circumferential direction of the flange can also implement a uniform liquid drainage function in the radial direction, and even if there are external impurities blocking some of the liquid drainage notches, liquid drainage can be implemented through the other liquid drainage notches, so that the normal liquid drainage function can be improved.

In some embodiments, the baffle has a plurality of liquid drainage holes penetrating in the thickness direction of the baffle; and the plurality of liquid drainage holes are circumferentially arranged at intervals on an outer edge of the cover plate, and are alternately arranged with the plurality of liquid drainage notches in a circumferential direction.

The plurality of liquid drainage holes penetrating in the thickness direction and the plurality of liquid drainage notches on the flange are alternately arranged in the circumferential direction, so that more uniform radial liquid drainage and circumferential liquid drainage can be implemented at various positions in the circumferential direction.

In some embodiments, the cover body includes: a cover plate configured to cover the opening portion; and a core connected to or integrally formed with the cover plate and located on a side of the cover plate adjacent to the actuation assembly, the core having a liquid guide groove.

A surface of the core of the cover body faces the actuation assembly, and thus can abut against the actuation assembly when the actuation assembly is actuated and move under the push of the actuation assembly, while the liquid guide groove provided on the core can guide the liquid that enters the accommodating cavity to be discharged outwardly through the liquid drainage channel between the cover plate and the opening portion.

In some embodiments, the core includes a plurality of sub-cores, and the plurality of sub-cores are adjacent to each other to form the liquid guide groove.

The gaps between adjacent sub-cores among the plurality of sub-cores can form a plurality of liquid guide grooves in the form of a flow channel, so that uniform outward liquid discharge can be implemented.

In some embodiments, the liquid drainage mechanism further includes a fixing member, the fixing member being configured to fix the valve body to a target member; wherein a circumferential side wall of the fixing member has a water intake notch, the liquid intake portion includes a liquid intake hole provided in a wall of the accommodating cavity, and the liquid intake hole is in communication with the water intake notch. When fixing the valve body to the fixing member, the circumferential side wall of the fixing member is provided with the water intake notch in communication with the liquid intake hole in the wall of the accommodating cavity, so that when the fixing member is fixed to the target member, the liquid flowing to the fixing member can flow into the accommodating cavity through the water intake notch and the liquid intake hole, making the liquid drainage process smoother.

In one aspect of the present disclosure, provided is a battery box, including: a box body configured to accommodate a battery cell, and a liquid drainage mechanism as described above. The liquid drainage mechanism is located at a lower portion of the box body.

By disposing the liquid drainage mechanism at the lower portion of the box, the liquid in the box body can flow to the lower portion of the box body under the action of gravity, so that the liquid in the box body is quickly discharged by using the liquid drainage mechanism.

In one aspect of the present disclosure, provided is a battery, including: a liquid drainage mechanism as described above; or a battery box as described above.

The battery using the liquid drainage mechanism or the battery box as described above can improve the use reliability and safety of the battery.

In some embodiments, the battery further includes: a battery cell disposed in the box body; and a thermal management member disposed in the box body and configured for heat exchange with the battery cell.

Liquid generated or leaked during the use of the thermal management member disposed in the box body can be quickly discharged through the liquid drainage mechanism.

In some embodiments, a plurality of thermal management members are provided. When a plurality of thermal management members are provided in the box body, each thermal management member has a plurality of joints when mounted and connected. The liquid drainage mechanism can discharge a liquid working medium leaked from the joints out of the battery, thereby improving the use reliability and safety of the battery.

In some embodiments, the battery cell has a terminal post located at a lower portion or a side portion of the battery cell.

Where the terminal post of the battery cell is disposed at the lower portion or the side portion of the battery cell, the liquid drainage mechanism can quickly discharge the liquid, thereby reducing the risk of short circuits caused by the liquid contacting the terminal post.

In one aspect of the present disclosure, provided is an electrical apparatus, including a battery as described above, the battery being configured to supply electric energy.

The electrical apparatus using the battery as described above has higher reliability and safety.

### DESCRIPTION OF DRAWINGS

In order to more clearly illustrate the technical solutions of the embodiments of the present disclosure, the drawings to be used in the description of the embodiments of the present disclosure will be described briefly below. Obviously, the drawings in the following description are merely some embodiments of the present disclosure. For those skilled in the art, other drawings can also be obtained according to these drawings without any creative effort.

The present disclosure can be more clearly understood from the following detailed description with reference to the accompanying drawings, in which:
Fig. **1** is a schematic structural view of some embodiments of an electrical apparatus according to the present disclosure;
Fig. **2** is a schematic structural view of some embodiments of a battery according to the present disclosure;
Fig. **3A** is a schematic structural exploded view of a first embodiment of a liquid drainage mechanism according to the present disclosure;
Fig. **3B** **is** a schematic cross-sectional view of the embodiment shown in Fig. **3A** in an unopened state;
Fig. **3C** **is** a schematic cross-sectional view of the embodiment shown in Fig. **3A** in an open state;
Fig. **3D** is a schematic structural perspective view of a valve body in the embodiment shown in Fig. **3A****;**
Fig. **3E** is a schematic structural perspective view of an actuation assembly in the embodiment shown in Fig. **3A****;**
Figs. **3F** and **3G** are respectively schematic structural perspective views of a cover body in the embodiment shown in Fig. **3A** from different viewing angles;
Fig. **3H** is a schematic structural perspective view of a baffle in the embodiment shown in Fig. **3A****;**
Fig. **3I** is a schematic structural perspective view of an engagement ring in the embodiment shown in Fig. **3A****;**
Figs. **3J** and **3K** are respectively schematic structural perspective views of a cover assembly in the embodiment shown in Fig. **3A** from different viewing angles;
Fig. **3L** is a schematic structural perspective view of a fixing member in the embodiment shown in Fig. **3A****;**
Fig. **4A** is a schematic structural exploded view of a second embodiment of a liquid drainage mechanism according to the present disclosure;
Figs. **4B** and **4C** are respectively schematic perspective views of a mounting structure in the embodiment shown in Fig. **4A** from different viewing angles;
Fig. **4D** is a schematic cross-sectional view of the mounting structure in the embodiment shown in Fig. **4A** in an unopened state;
Fig. **5A** is a schematic structural exploded view of a third embodiment of a liquid drainage mechanism according to the present disclosure;
Figs. **5B** and **5C** are respectively schematic perspective views of a mounting structure in the embodiment shown in Fig. **5A** from different viewing angles;
Fig. **5D** is a schematic cross-sectional view of the mounting structure in the embodiment shown in Fig. **5A** in an unopened state;
Fig. **6A** is a schematic structural exploded view of a fourth embodiment of a liquid drainage mechanism according to the present disclosure;
Figs. **6B** and **6C** are respectively schematic perspective views of a mounting structure in the embodiment shown in Fig. **6A** from different viewing angles;
Fig. **6D** is a schematic cross-sectional view of the mounting structure in the embodiment shown in Fig. **6A** in an unopened state;
Fig. **7A** is a schematic structural exploded view of a fifth embodiment of a liquid drainage mechanism according to the present disclosure;
Figs. **7B** and **7C** are respectively schematic perspective views of a mounting structure in the embodiment shown in Fig. **7A** from different viewing angles; and
Fig. **7D** is a schematic cross-sectional view of the mounting structure in the embodiment shown in Fig. **7A** in an unopened state.

It should be understood that the dimensions of various parts shown in the drawings are not drawn to actual scale. In addition, the same or similar reference signs indicate the same or similar members.

Description of reference signs:
**10.** Valve body; **11.** Accommodating cavity; **111.** Guide groove; **112.** Limiting protrusion; **12.** Liquid intake portion; **121.** Liquid inlet; **122.** Liquid intake hole; **13.** Opening portion; **131.** First groove; **14.** Threaded section; **15.** Mating portion; **151.** Second groove; **152.** First stepped hole section; **153.**Second stepped hole section; **154.** Stepped surface; **16.** Positioning post;
**20.** Cover assembly; **21.** Cover body; **211.** Cover plate; **212.** Sub-core; **213.** Guide post; **214.** Liquid guide groove; **22.** Baffle; **221.** Liquid drainage hole; **23.** Buffer cavity; **24.** Engagement ring; **241.** Flange; **242.** Liquid drainage notch;
**30.** Actuation assembly; **31.** Through hole; **32.** Deformable member; **33.** Groove;
**41.** Tension spring; **42.** Compression spring; **43.** Disc spring;
**51.** First elastic sealing member; **52.** Second elastic sealing member;
**60.** Fixing member; **61.** Internal thread; **62.** Water intake notch;
**70.** Battery box; **71.** Box body; **711.** Upper box body; **712.** Lower box body; **72.** Liquid drainage mechanism;
**80.** Battery; **81.** Battery cell; **82.** Thermal management member;
**90.** Vehicle; **91.** Controller; **92.** Motor.

### DETAILED DESCRIPTION

Embodiments of the present disclosure are described in further detail below in conjunction with the drawings and embodiments. The following detailed description of the embodiments and the drawings are configured to illustrate the principles of the present disclosure by way of example, but should not be configured to limit the scope of the present disclosure, that is, the present disclosure is not limited to the described embodiments.

In the description of the present disclosure, it should be noted that, unless otherwise stated, "plurality of" means two or more; the orientation or positional relationships indicated by the terms "upper", "lower", "left", "right", "inner" and "outer" are only for facilitating the description of the present disclosure and simplifying the description, rather than indicating or implying that the apparatus or element referred to must have a particular orientation or be constructed and operated in a particular orientation, and therefore will not be interpreted as limiting the present disclosure. In addition, the terms "first", "second" and "third" are used for descriptive purposes only, and cannot be construed as indicating or implying relative importance. "Perpendicular" is not strictly perpendicular, but within the allowable range of errors. "Parallel" is not strictly parallel, but within the allowable range of errors.

Orientation words appearing in the following description are all directions shown in the drawings, and do not limit the specific structure of the present disclosure. In the description of the present disclosure, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skill in the art, the specific meanings of the terms mentioned above in the present disclosure should be construed according to specific circumstances.

Some embodiments of the present invention will be further described in detail below with reference to the drawings. In the case of no conflict, the features of the embodiments describe below can be combined with each other.

In some related technologies, when a cooling plate is mounted in the battery box to manage the cooling and heat dissipation of the battery module or the battery cell, there is a possibility of leakage of a liquid working medium (e.g., water or a liquid refrigerant) circulating inside the cooling plate at the joint position of the cooling plate. In addition, the inside of the battery box is easily affected by environmental changes or humid air, and condensation water is easily generated. The accumulation of condensation water or the leakage of liquid working medium in the battery box puts the battery at risk of causing short circuits, affecting the use reliability and safety of the battery.

In view of this, embodiments of the present disclosure provide a liquid drainage mechanism, a battery box, a battery and an electrical apparatus, which can improve the use reliability and safety of the battery.

The liquid drainage mechanism of the embodiments of the present disclosure may be applied to a battery box or a battery for discharging liquid from the battery box or the battery, or may be applied to other devices or containers that require liquid drainage. The battery box may be applied to various types of batteries to accommodate battery cells or battery modules. The battery may be applied to various types of electrical devices that use batteries. The electrical device may be, for example, a mobile phone, a portable device, a laptop, an electric motorcycle, an electric vehicle, a ship, a spacecraft, an electric toy, or an electric tool. For example, the spacecraft includes an airplane, a rocket, a space shuttle, or a spaceship. The electric toy includes a fixed or mobile electric toy, such as a game console, an electric vehicle toy, an electric ship toy, and an electric airplane toy. The electric tool includes an electric tool for metal cutting, an electric tool for grinding, an electric tool for assembling and an electric tool for railways, such as an electric drill, an electric grinder, an electric wrench, an electric screwdriver, an electric hammer, an electric impact drill, a concrete vibrator, and an electric planer. The electrical device is not specially limited in the embodiments of the present disclosure.

The battery module mounted in the battery box may include a plurality of battery cells connected in series, in parallel or in series-parallel. The battery cell is the smallest unit constituting a battery. The battery cell includes an electrode assembly that enable an electrochemical reaction to occur. The battery cell may include a lithium-ion secondary battery, a lithium-ion primary battery, a lithium sulfur battery, a sodium lithium-ion battery, a sodium-ion battery or a magnesium-ion battery and so on, which will not be limited in the embodiments of the present disclosure. The battery cell may be cylindrical, flat, cuboid or in another shape. This is not limited by the embodiments of the present disclosure.

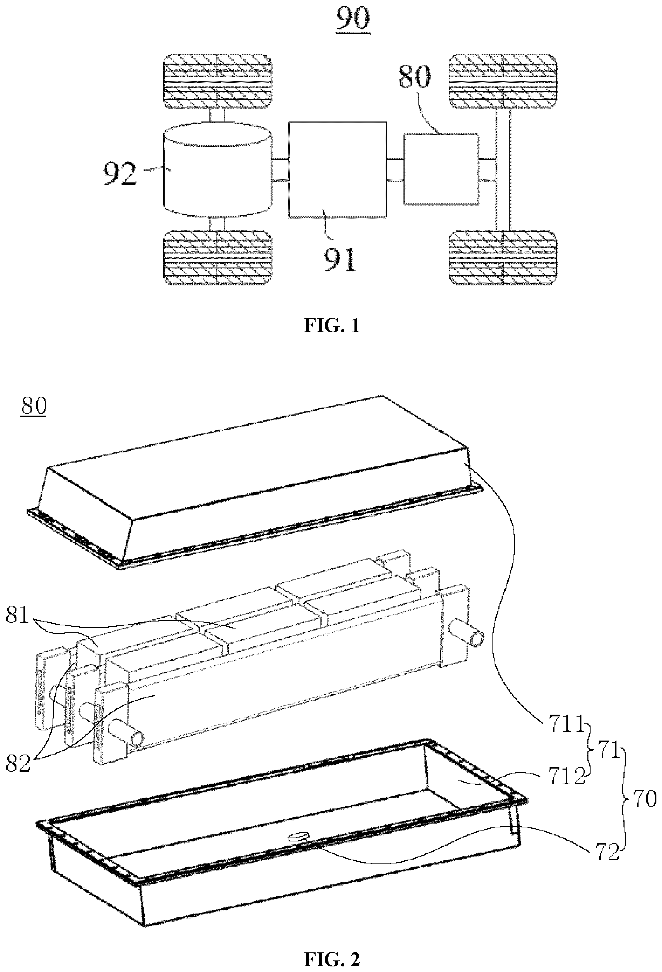

Fig. 1 is a schematic structural view of some embodiments of an electrical device according to the present disclosure. For the convenience, an example in which the electrical apparatus is a vehicle **90** is taken for description. The vehicle **90** may be a fuel vehicle, a gas vehicle or a new energy vehicle. The new energy vehicle may be an all-electric vehicle, a hybrid electric vehicle, etc. The battery **80** may be arranged at the bottom or the head or the tail of the vehicle **90.**

The battery **80** may be configured to supply power to the vehicle **90.** For example, the battery **80** can serve as an operating power supply of the vehicle **90** for use in a circuit system of the vehicle **90,** for example, to meet a working power demand of the vehicle **90** during startup, navigation and running. The battery **80** may not only be used as the operating power source of the vehicle **90,** but also may be used as a driving power source of the vehicle **90** to provide driving force for the vehicle **90** in place of or partially in place of fuel or natural gas.

The vehicle **90** may be further provided with an axle, wheels, a motor **92** and a controller **91.** The controller **91** is used to control the battery **80** to power the motor **92.** For example, when the vehicle **90** uses the battery **80** as a driving power source, the controller **91** can provide the motor **92** with power required for constant speed and acceleration. The motor **92** is used to drive the axle to rotate, so as to drive the wheels to rotate.

Fig. **2** is a schematic structural view of some embodiments of a battery according to the present disclosure. Referring to Fig. **2****,** in some embodiments, the battery **80** includes a battery box **70** and a battery cell **81.** The battery box **70** is configured to accommodate the battery cell **81,** and may provide the battery cell **81** with functions such as cooling, sealing, and anti-impact, or reduce the possibility of liquid or other foreign matter adversely affecting the charging, discharging, or safety of the battery cell.

The battery box **70** may further include a box body **71** for accommodating the battery cell **81,** and a liquid drainage mechanism **72.** The liquid drainage mechanism **72** may be located at a lower portion of the box body **71,** so that the liquid in the box body **71** can flow to the lower portion of the box body **71** under the action of gravity, and the liquid in the box body **71** is thus quickly discharged by using the liquid drainage mechanism **72.** The battery box **70** may include one or more liquid drainage mechanisms **72.** The plurality of liquid drainage mechanisms **72** may be arranged at intervals or in zones along at least one direction on a bottom face of the lower portion of the box body **71.**

In Fig. **2****,** the box body **71** may include an upper box body **711** and a lower box body **712.** The upper box body **711** and the lower box body **712** are fastened together to form a space for accommodating the battery cell **81.** The liquid drainage mechanism **72** may be disposed on a bottom face of the lower box body **712.** In addition, the battery **80** may further include a thermal management member **82** disposed in the box body **71,** such as a cooling plate in which a liquid working medium circulates. The thermal management member **82** is configured for heat exchange with the battery cell **81.** In this way, the liquid generated or leaked during the use of the thermal management member **82** disposed in the box body **71** can be quickly discharged through the liquid drainage mechanism **72.**

Referring to Fig. **2****,** in some embodiments, a plurality of thermal management members **82** are provided. When the plurality of thermal management members **82** are provided in the box body **71,** each thermal management member **82** has a plurality of joints when mounted and connected. More joints also increase the risk of leakage of the liquid working medium, but the liquid drainage mechanism **72** provided can discharge the liquid working medium leaked from the joints out of the battery **80,** thereby improving the use reliability and safety of the battery **80.**

There may be a plurality of battery cells **81** disposed in the box body **71,** and the plurality of battery cells **81** are electrically connected to each other (for example, in series, in parallel or in series-parallel) to achieve the required electrical performance parameters of the battery **80.** The plurality of battery cells **81** may be arranged in rows, and one or more rows of battery cells **81** may be arranged in the box body **71** according to requirements.

In some embodiments, the plurality of battery cells **81** may be arranged along at least one of the length direction and the width direction of the box body **71.** At least one row or column of battery cells **81** may be provided according to actual requirements. If necessary, one or more layers of battery cells **81** may also be provided in the height direction of the battery **80.**

In some embodiments, the plurality of battery cells **81** may be connected in series or in parallel or in series-parallel first to form a plurality of battery modules, which may then be connected in series or in parallel or in series-parallel to form a whole that is accommodated in the box body **71.** In some other embodiments, all the battery cells **81** are directly connected in series or in parallel or in series-parallel, and then an entirety composed of all the battery cells **81** is accommodated in the box body **71.**

The battery cell **81** may include a housing, an electrode assembly and an end cover assembly. The battery cell **81** further includes an electrolyte solution. The housing has a chamber for accommodating the electrode assembly, and an end opening in communication with the chamber. The housing is shaped according to the shape of one or more electrode assemblies. The housing may be a hollow cuboid, a hollow cube, or a hollow cylinder. The housing may be made of an electrically conductive metal material or plastic. Optionally, the housing is made of aluminum or an aluminum alloy.

The end cover assembly is provided at the end opening to form a sealed cavity with the housing for accommodating the electrode assembly. The end cover assembly may include two terminal posts. The two terminal posts have opposite polarities, and are respectively electrically connected to tabs on the electrode plates of the corresponding polarities in the electrode assembly via a connecting assembly or directly.

The battery cell **81** has a terminal post, which may be located at a lower portion or a side portion of the battery cell **81.** For this situation, the liquid drainage mechanism **72** can quickly discharge the liquid, thereby reducing the risk of short circuits caused by the liquid contacting the terminal post.

The electrode assembly may include a positive electrode plate, a negative electrode plate, and a separator located between the positive electrode plate and the negative electrode plate. The battery cell operates mainly relying on movement of internal metal ions between the positive electrode plate and the negative electrode plate.

The positive electrode plate may include a positive electrode current collector and a positive electrode active material layer. A positive tab is connected to or formed on the positive electrode current collector. Taking a lithium-ion battery as an example, the material of the positive electrode current collector may be aluminum, and the positive electrode active material may be a lithiated material that can provide lithium ions, such as lithium cobalt oxide, lithium iron phosphate, ternary lithium, or lithium manganate. In the case where a bonding material is used to bond the positive electrode current collector and the positive electrode active material layer, the bonding material may be **polyvinylidene fluoride (PVDF),** etc.

The negative electrode plate may include a negative electrode current collector and a negative electrode active material layer. A negative tab is connected to or formed on the negative electrode current collector. Taking a lithium-ion battery as an example, the material of the negative electrode current collector may be copper, and the negative electrode active material may be a material that can store lithium ions, such as carbon, silicon, or lithium titanate. In the case where a bonding material is used to bond the negative electrode current collector and the negative electrode active material layer, the bonding material may be carboxymethylcellulose, epoxy resin, styrene-butadiene rubber, etc.

The separator may be of a material such as **polypropylene (PP) or polyethylene (PE).** The electrolyte solution includes an electrolyte and a solvent. The electrolyte is an organic metal salt, an inorganic salt, etc., which can provide metal ions that shuttle between the positive electrode plate and the negative electrode plate. In order to have sufficient current flow capability, there may be a plurality of positive tabs which are stacked together, and there may be a plurality of negative tabs which are stacked together. In addition, the electrode assembly may have a wound structure or a stacked structure, but the embodiments of the present disclosure are not limited thereto.

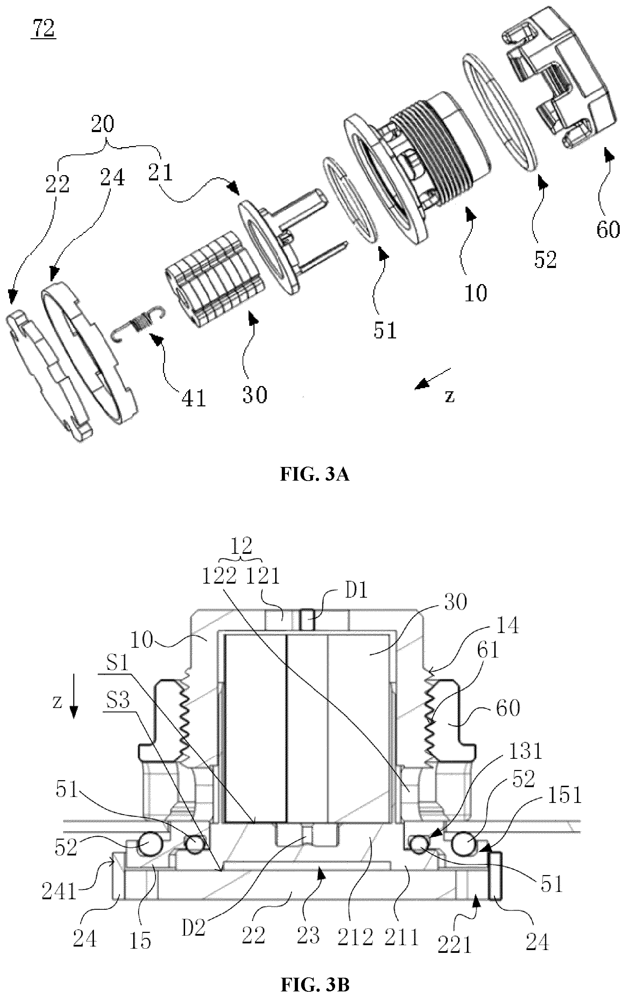

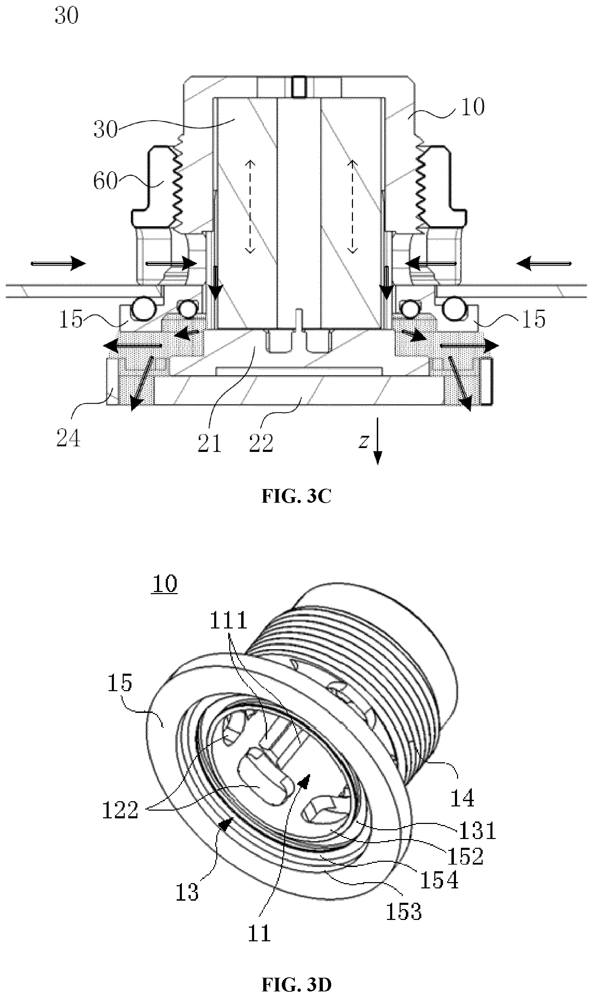

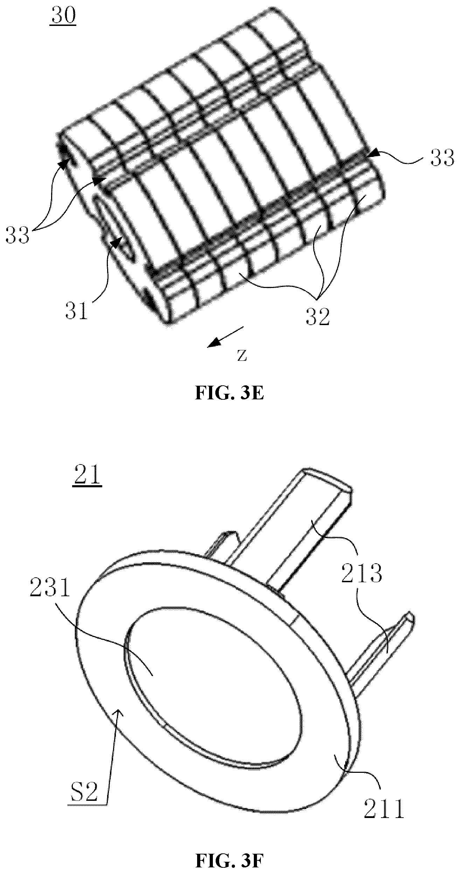

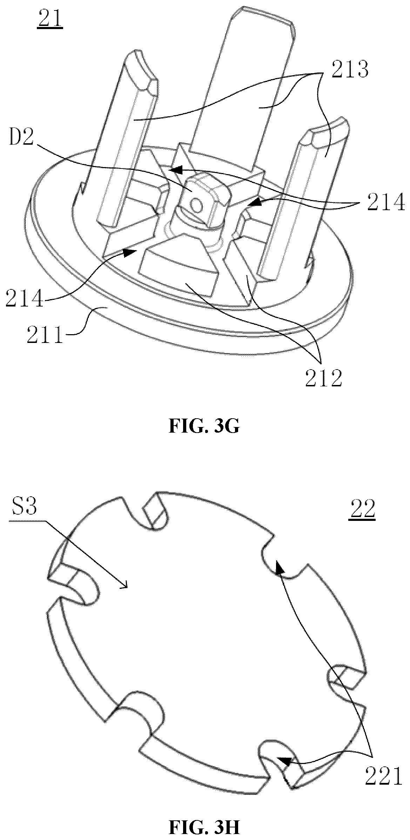

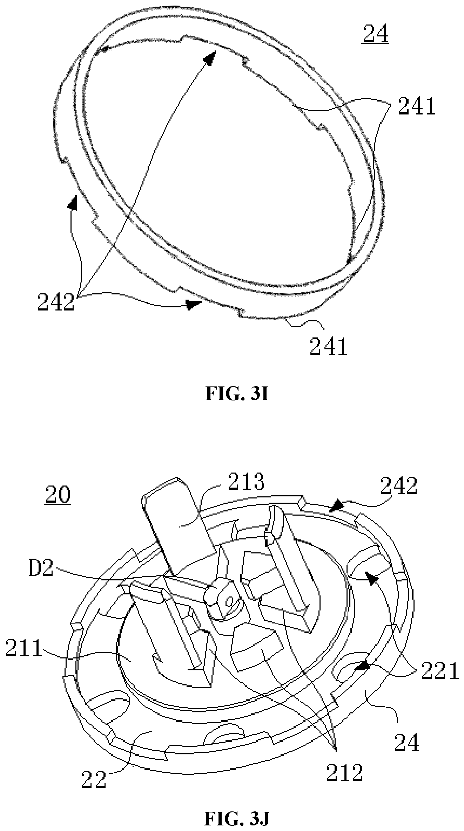

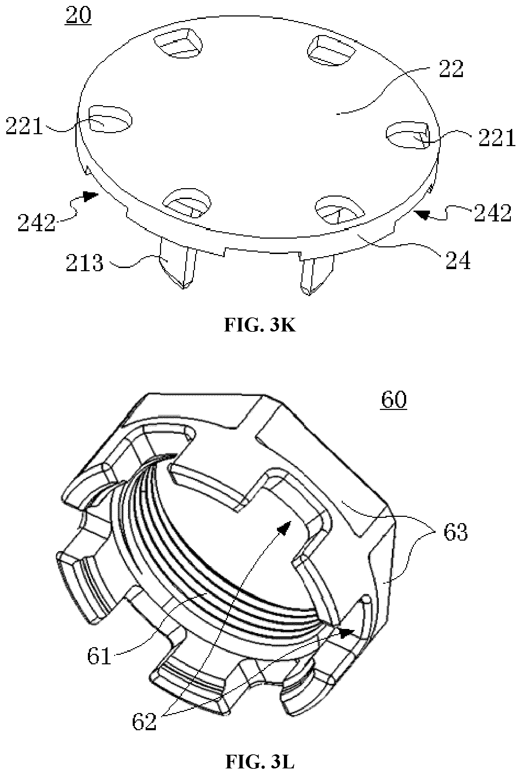

Fig. **3A** is a schematic structural exploded view of a first embodiment of a liquid drainage mechanism according to the present disclosure. Fig. **3B** is a schematic cross-sectional view of the embodiment shown in Fig. **3A** in an unopened state. Fig. **3C** is a schematic cross-sectional view of the embodiment shown in Fig. **3A** in an open state. Fig. **3D** is a schematic structural perspective view of a valve body in the embodiment shown in Fig. **3A****.** Fig. **3E** is a schematic structural perspective view of an actuation assembly in the embodiment shown in Fig. **3A****.** Figs. **3F** and **3G** are respectively schematic structural perspective views of a cover body in the embodiment shown in Fig. **3A** from different viewing angles. Fig. **3H** is a schematic structural perspective view of a baffle in the embodiment shown in Fig. **3A****.** Fig. **3I** is a schematic structural perspective view of an engagement ring in the embodiment shown in Fig. **3A****.** Figs. **3J** and **3K** are respectively schematic structural perspective views of a cover assembly in the embodiment shown in Fig. **3A** from different viewing angles. Fig. **3L** is a schematic structural perspective view of a fixing member in the embodiment shown in Fig. **3A****.**

Referring to Figs. **3A-3L****,** the embodiment of the present disclosure provide a liquid drainage mechanism **72,** including a valve body **10,** a cover assembly **20** and an actuation assembly **30.** The valve body **10** is provided with an accommodating cavity **11,** a liquid intake portion **12** and an opening portion **13.** The liquid intake portion **12** and the opening portion **13** are both in communication with the accommodating cavity **11.** The cover assembly **20** is movably disposed on the opening portion **13.** The actuation assembly **30** is disposed in the accommodating cavity **11,** and the actuation assembly **30** is configured to be actuated in response to a liquid entering the accommodating cavity **11** through the liquid intake portion **12,** so as to move the cover assembly **20** to at least partially open the opening portion **13.**

The actuation assembly **30** that can be actuated in response to the liquid is provided in the accommodating cavity **11** of the valve body **10,** so that when the liquid enters the accommodating cavity **11** through the liquid intake portion **12,** the actuation assembly **30** is actuated to move the cover assembly **20** to at least partially open the opening portion **13,** and the liquid in the accommodating cavity **11** is thus discharged outwardly from the opening portion **13** to implement an effective liquid drainage function.

The liquid drainage function here is implemented by establishing a liquid drainage channel from the liquid intake portion **12** of the valve body **10** to the accommodating cavity **11** and then to the opening portion **13** through the actuation of the actuation assembly **30,** thereby allowing the liquid that enters the accommodating cavity **11** through the liquid intake portion **12** to be discharged outwardly from the opening portion **13.** The actuation assembly **30** may be actuated in different ways in response to the liquid, where responding to the liquid includes coming into contact with the liquid or sensing the liquid in a non-contact manner. The actuation of the actuation assembly **30** to move the cover assembly **20** may be to directly apply an acting force to the cover assembly **20,** or may be to indirectly apply an acting force to the cover assembly **20** by acting on an intermediate member. In addition, moving the cover assembly **20** to at least partially open the opening portion **13** includes moving away from the opening portion in a direction of an opening of the opening portion **13,** moving away in a direction perpendicular to the opening of the opening portion **13** to expose the opening portion **13,** rotating to change the covering range of the opening portion **13** by the cover assembly **20,** etc.

Referring to Fig. **3B****,** in some embodiments, the cover assembly **20** includes an action surface **S1,** and the actuation assembly **30** is configured to push the action surface **S1** upon actuation, so as to move the cover assembly **20** to at least partially open the opening portion **13.** By causing the actuation assembly **30** to apply a thrust force to the action surface S1 of the cover assembly **20** to push the action surface **S1,** the cover assembly **20** is displaced under the action of the thrust force, so as to at least partially open the opening portion **13.** In this way, the reliability of opening the opening portion **13** when the actuation assembly **30** is actuated can be improved.

In Figs. **3B** and **3C****,** the actuation assembly **30** can push the action surface **S1** upon actuation, so as to move the cover assembly **20** in a direction away from the opening portion **13.** In Figs. **3A-3C****,** the direction in which the cover assembly **20** moves away from the opening portion **13** is defined as direction **z,** and this direction **z** may be parallel to the thickness direction of the cover assembly **20.** In Fig. **3B****,** when the actuation assembly **30** is in an unactuated state, the cover assembly **20** abuts against an end face of the opening portion **13** to form a closed region in which the liquid does not circulate.

When the action surface **S1** of the cover assembly **20** is pushed by the actuation assembly **30,** the cover assembly **20** moves in the direction away from the opening portion **13.** As can be seen from Fig. **3C****,** at this time, a gap formed between the end cover assembly **20** and the end face of the opening portion **13** constitutes a liquid drainage channel (indicated by shading in Fig. **3C**) between the end cover assembly **20** and the opening portion **13.** Referring to a plurality of black arrows in Fig. **3C****,** the liquid can enter the accommodating cavity of the valve body from the liquid intake portion on the side of the valve body, then flow to the opening portion in the direction **z,** and then be discharged outwardly from the liquid drainage channel between the opening portion and the end cover assembly **20.** In this way, the liquid drainage channel for the liquid to flow out is easily and quickly formed between the opening portion **13** and the cover assembly **20,** thereby increasing the liquid drainage speed, and also facilitating the reduction of the space occupied by the liquid drainage mechanism **72** on a plane perpendicular to the direction of the cover assembly **20.**

Referring to Figs. **3A** and **3E****,** in some embodiments, the actuation assembly **30** includes a deformable member **32.** The deformable member **32** is configured to expand and deform after contact with the liquid. The deformable member **32** expands and deforms after contact with the liquid, so as to create a driving effect to move the cover assembly **20** through the expanded size, and this method can respond more quickly to the liquid entering the accommodating cavity **11** through the liquid intake portion **12,** increasing the reaction speed of the liquid drainage mechanism **72.**

In some embodiments, the deformable member **32** is configured to absorb the liquid and expand. With its own ability to absorb the liquid, the deformable member **32** can absorb the liquid while in contact with the liquid, and naturally expand outwardly to increase the volume, thereby being more reliably actuated when encountering the liquid. In addition to being implemented by its absorption of liquid, the expansion and deformation of the deformable member **32** may be implemented by the pressure of the liquid on the deformable member **32** or by other means in some other embodiments.

Considering that the deformable member **32** will occupy a certain space in the accommodating cavity **11** after expansion and deformation, in order to reduce the possibility of the deformable member **32** interfering with the liquid drainage, referring to Fig. **3E****,** in some embodiments, the deformable member **32** includes a groove **33** and/or a through hole **31** for communicating the liquid intake portion **12** with the opening portion **13,** so that the liquid can be discharged outwardly smoothly and continuously after the deformable member **32** expands and deforms. In Fig. 3E, the deformable member **32** has a through hole **31** penetrating the center and a plurality of grooves **33** located on the periphery.

In some embodiments, the deformable member **32** may be a single piece. Referring to Fig. **3E****,** in some embodiments, there may be a plurality of deformable members **32** which are configured in a sheet shape. The plurality of sheet-shaped deformable members **32** bare stacked in a thickness direction thereof. Each sheet-shaped deformable member **32** may have a through hole penetrating the center and a plurality of grooves located on the periphery. When the plurality of deformable members **32** are stacked together in the direction z, the through holes of the deformable members may be in communication with each other to form a whole through hole, and the peripheral grooves of deformable members may correspondingly form continuous long grooves.

The plurality of sheet-shaped deformable members **32** can increase the contact area between the deformable members **32** and the liquid, to improve the sensitivity of responding to the liquid, and the stacking of the plurality of sheet-shaped deformable members **32** in the thickness direction itself (the direction **z**) can more effectively control the expansion direction of the deformable members **32,** to cause them to expand and deform in the desired direction. For example, for the deformable members that can absorb the liquid, when they become thicker after absorbing the liquid, the plurality of thickened deformable members are superimposed in the thickness direction to generate expansion and deformation in the thickness direction.

In order to enable the deformable member **32** to maintain durability after contact with the liquid, in some embodiments, the deformable member **32** includes an electrical insulating paper to obtain a higher durability. In some other embodiments, other deformable members of materials or structures capable of absorbing the liquid may be used, such as cellulose polymer organic materials.

In some embodiments, a volume of an alcoholic liquid that can be absorbed by the deformable member **32** per unit volume is a first absorption amount, and a volume of water that can be absorbed by the deformable member **32** per unit volume is a second absorption amount, the first absorption amount being greater than the second absorption amount. By using a deformable member **32** that absorbs a greater volume of alcoholic liquid than water, the liquid drainage mechanism **72** can obtain a selective liquid drainage function, thereby meeting the main demand for discharging the alcoholic liquid. For example, a cooling liquid circulating in the cooling plate in the battery box uses an alcoholic liquid such as ethylene glycol, and the liquid drainage mechanism including this deformable member **32** can selectively discharges the cooling liquid outwardly when it leaks.

Further, a volume change ratio of the deformable member **32** when absorbing a unit volume of alcoholic liquid is defined as a first volume deformation ratio, and a volume deformation ratio of the deformable member **32** when absorbing a unit volume of water is defined as a second volume deformation ratio. The first volume deformation ratio may be greater than the second volume deformation ratio. By using a deformable member **32** that absorbs a greater volume change ratio of alcoholic liquid than water, the liquid drainage mechanism **72** can obtain a selective liquid drainage function, thereby meeting the main demand for discharging the alcoholic liquid.

In order to enable the actuation assembly **30** to maintain the state in which the cover assembly **20** covers the opening portion **13** when not actuated, in some embodiments, the liquid drainage mechanism **72** further includes a connection structure. The connection structure is connected to the valve body **10** and the cover assembly **20,** and is configured to keep the cover assembly **20** covering the opening portion **13** when the actuation assembly **30** is not actuated. This can meet the requirements for closing the region where the liquid drainage mechanism **72** is mounted and improve the response sensitivity of the liquid drainage mechanism **72.**

In some examples, the connection structure includes an elastic connection member. The elastic connection member is configured to elastically deform when the cover assembly **20** opens the opening portion **13.** When the actuation assembly **30** is actuated, the cover assembly **20** moves to open the opening portion **13,** and the elastic connection member enables the cover assembly **20** to return to the opening portion **13** when the actuation assembly **30** returns to the unactuated state, thereby enabling the liquid drainage mechanism **72** to be reused. Moreover, the elastic connection member can cause the cover assembly **20** to more stably keep covering the opening portion **13** when the actuation assembly **30** is not actuated, thereby maintaining the internal sealing of the liquid drainage mechanism.

Referring to Fig. **3A****,** in some embodiments, the elastic connection member includes a tension spring **41.** In Figs. **3B** and **3G****,** the valve body **10** may include a first fixing portion **D1,** and the cover assembly **20** may include a second fixing portion **D2.** Two ends of the elastic connection member are respectively connected to the first fixing portion **D1** and the second fixing portion **D2.** When the cover assembly **20** is separated from the opening portion **13,** the second fixing portion **D2** can move in a direction away from the first fixing portion **D1** and stretch the elastic connection member. The tension spring **41** provides an elastic force to keep the cover assembly **20** at the opening portion **13.** When the actuation assembly **30** is actuated, the tension spring **41** is stretched, so that the elastic tension force is used for restoring when the actuation assembly **30** is not actuated.

Referring to Fig. **3B****,** the actuation assembly **30** is provided with a through hole **31,** and the elastic connection member may be disposed in the accommodating cavity **11** and through the through hole **31.** In this way, the elastic connection member and the actuation assembly **30** can share a height space, contributing to achieving a smaller-sized liquid drainage mechanism **72.**

In Fig. **3B****,** the first fixing portion **D1** is located on a bottom wall of the accommodating cavity **11,** and the second fixing portion **D2** is located on a surface of the cover assembly **20** that faces the accommodating cavity **11.** In the penetration direction of the through hole **31,** the first fixing portion **D1** and the second fixing portion **D2** are disposed opposite to each other. The first fixing portion **D1** and the second fixing portion **D2** are connected to the elastic connection member in the penetration direction of the through hole **31,** so that interference is less likely to occur during relative movement between the elastic connection member and the actuation assembly **30,** and the liquid drainage mechanism **72** thus can reliably implement the liquid drainage function.

Specifically, in Fig. **3B****,** the liquid intake portion **12** may include two liquid inlets **121** disposed spaced apart from each other, and the first fixing portion **D1** is a partition strip that separates the two liquid inlets **121.** The elastic connection member is provided with a first hook at one end close to the first fixing portion **D1,** and the first hook hooks the partition strip to connect the valve body **10** to the elastic connection member. The two liquid inlets **121** disposed spaced apart from each other can not only implement liquid intake by means of the liquid inlets **121,** but can also use the partition strip between the two liquid inlets **121** to connect the first hook at the end of the elastic connection member, so that the elastic connection member can be easily mounted, and the liquid intake function of the valve body **10** can also be provided.

In Figs. **3B** and **3G****,** the second fixing portion **D2** is formed by protruding from the surface of the cover assembly **20** that faces the accommodating cavity **11,** a second hook is provided at one end of the elastic connection member close to the second fixing portion **D2,** the second fixing portion **D2** is provided with a hanging hole, and the second hook hooks the hanging hole to connect the cover assembly **20** to the elastic connection member. A protrusion on the cover assembly **20** is provided with a hook for connection with the second hook at the end of the elastic connection member, so that the elastic connection member can be easily mounted.

In order to make the liquid drainage mechanism **72** easily mounted in the region that requires liquid drainage, such as the bottom of the box body of the battery box, referring to Figs. **2****,** **3A****,** **3B** and **3L****,** in some embodiments, the liquid drainage mechanism **72** further includes a fixing member **60.** The fixing member **60** is configured to fix the valve body **10** to a target member. The target member here may be a bottom plate of the box body of the battery box. The valve body **10** is fixed to the target member via the fixing member **60,** so that the valve body **10** can more reliably implement the liquid drainage function at the location of the target member.

Referring to Figs. **3B** and **3L****,** in some embodiments, an outer wall of the valve body **10** includes a threaded section **14** extending in a first direction (which may be the direction **z**). The fixing member **60** includes a fixing nut. The fixing nut has internal threads **61** and is configured to be locked to the outer wall by means of the threads and form a clamping space together with the mating portion **15.** This threaded connection method makes assembly and disassembly very easy and quick, and can be adapted to target members of different thicknesses. Moreover, it is easy to implement torque monitoring during the mounting, which improves the reliability of the fixed connection. In some other embodiments, the valve body **10** may be mounted to the target member in other ways, including omitting the fixing member **60.** For example, the outer wall of the valve body **10** is provided with a structure capable of being in snap-fit or threaded connection with the target member.

In Fig. **3L****,** a circumferential side wall of the fixing member **60** may have a water intake notch **62.** The liquid intake portion **12** includes a liquid intake hole **122** provided in a wall of the accommodating cavity **11,** and the liquid intake hole **122** is in communication with the water intake notch **62.** In this way, when fixing the valve body **10** to the fixing member **60,** the circumferential side wall of the fixing member **60** is provided with the water intake notch **62** in communication with the liquid intake hole **122** in the wall of the accommodating cavity **11,** so that when the fixing member **60** is fixed to the target member, the liquid flowing to the fixing member **60** can flow into the accommodating cavity **11** through the water intake notch **62** and the liquid intake hole **122,** making the liquid drainage process smoother. In Fig. **3D****,** an edge of the liquid intake hole **122** may be rounded to prevent a corner from being too sharp and affecting the inflow and outflow of the liquid.

Referring to Figs. **3B-3D****,** in some embodiments, the outer wall of the valve body **10** may further include a mating portion **15** formed by extending a preset size along a plane perpendicular to the first direction. The mating portion **15** is located at one end of the threaded section **14** in a screwing direction. The mating portion **15** may include a second groove **151,** and a second elastic sealing member **52** is provided in the second groove **151.** When the fixing nut is screwed in place, the second elastic sealing member **52** can improve the sealing between the valve body **10** and the target member.

In Fig. **3B****,** the opening portion **13** may include a first groove **131,** a first elastic sealing member **51** is provided in the first groove **131,** and at least a part of the cover assembly **20** is located in the first groove **131** when the actuation assembly **30** is not actuated. Since at least a part of the cover assembly **20** is located in the first groove **131** when the actuation assembly **30** is not actuated, the first elastic sealing member **51** in the first groove **131** of the opening portion **13** can improve the sealing between the cover assembly **20** and the opening portion **13.**

Considering that when the liquid drainage mechanism **72** is mounted, its cover assembly **20** is often located outside the target member and is likely to be scratched, squeezed or collided by other external structures, which may cause the liquid drainage mechanism **72** to fail. Accordingly, in some embodiments, the cover assembly **20** may have an energy-absorbing structure. When the cover assembly **20** is disposed on the outside and is scratched, squeezed or collided by other structures, the energy-absorbing structure provided on the cover assembly **20** can absorb energy to prevent or reduce damage to the liquid drainage mechanism **72** and reduce the risk of failure of the liquid drainage mechanism **72.**

The energy-absorbing structure may take various forms, including the use of an energy-absorbing material. Referring to Fig. **3B****,** in some embodiments, the energy-absorbing structure includes a buffer cavity **23** located in the cover assembly **20.** When the cover assembly **20** is squeezed or impacted, energy can be effectively absorbed through the deformation of the buffer cavity **23.** The buffer cavity **23** may be formed by assembling a plurality of components or may be integrally manufactured. The buffer cavity **23** may be provided with air or an energy-absorbing material, or may be set to vacuum.

Referring to Fig. **3A****,** in some embodiments, the cover assembly **20** includes a cover body **21** and a baffle **22.** The baffle **22 is** disposed on a side of the cover body **21** away from the valve body **10** and is connected to or integrally formed with the cover body **21.** The buffer cavity **23** is located between the cover body **21** and the baffle **22.** The cover assembly **20** covers the opening portion **13** by means of the cover body **21,** provides protection to the cover body **21** by means of the baffle **22,** and absorbs energy by means of the buffer cavity **23** between the baffle **22** and the cover body **21.**

In Figs. **3B****,** **3F** and **3H****,** the cover body **21** includes a cover plate **211.** A first cover plate surface **S2** on a side of the cover plate **211** adjacent to the baffle **22** has an inner recess **231.** A baffle surface **S3** on a side of the baffle **22** adjacent to the cover plate **211** and the inner recess **231** enclose the buffer cavity **23.** The cover plate **211** of the cover body **21** has the inner recess **231** enclosing the buffer cavity **23** with the baffle surface **S3,** so that when the baffle **22** is squeezed or impacted, it can first deform in the buffer cavity **23,** thereby reducing the energy transmitted to the baffle **22.**

Referring to Figs. **3D****,** **3F** and **3G****,** in some embodiments, the wall of the accommodating cavity **11** is provided with a guide groove **111,** and the cover body **21** further includes a guide post **213** formed by protruding toward the accommodating cavity **11,** the guide post **213** mates with the guide groove **111** for guidance when the cover body **21** covers the opening portion **13,** so as to limit a rotation angle of the cover plate **211** relative to the valve body **10.** The cover body **21** includes the cover plate **211** and the guide post **213** protruding toward the accommodating cavity **11,** and the guide post **213** can slide in the guide groove **111** on the wall of the accommodating cavity **11** to prevent the cover body **21** from rotating in the valve body **10** when the actuation assembly **30** is actuated, so as not to affect the liquid drainage process.

The guide post **213** and the guide groove **111** may both extend in the direction z. In order to guide the stable movement of the cover body **21,** a plurality of sets of guide posts **213** and guide grooves **111** may be used for guidance and mating. The plurality of sets of guide posts **213** and guide grooves **111** may be arranged at intervals in the circumferential direction of the valve body **10.**

In order to reduce the manufacturing and machining difficulty of the baffle **22** and use a harder material to resist external scratches, squeezes or collisions, in some embodiments, the baffle surface **S3** is flat. Accordingly, the material of the baffle **22** may have a higher strength than the material of the cover body **21.** The use of a higher-strength material to manufacture the baffle **22** can improve the ability of the cover assembly **20** of the liquid drainage mechanism **72** to resist external scratches, squeezes or collisions, whereas the use of a lower-strength material to manufacture the cover body **21** can facilitate the formation of a more complex structural form is, for example, forming a structure of the cover body **21** that includes a cover plate **211** having an inner recess **231,** and a guide post **213.**

Referring to Figs. **3B** and **3D****,** in some embodiments, the outer wall **14** of the valve body **10** includes a mating portion **15** formed by extending a preset size along a plane perpendicular to the thickness direction of the baffle **22.** The mating portion **15** includes a first stepped hole section **152** and a second stepped hole section **153,** a cross-sectional size of the second stepped hole section **153** is greater than a cross-sectional size of the first stepped hole section **152,** and the cover plate **211** is configured to be at least partially located in the second stepped hole section **153** when the actuation assembly **30** is not actuated, such that a second cover plate **211** surface on a side of the cover plate **211** adjacent to the actuation assembly **30** sealingly mates with a stepped surface **154** between the first stepped hole section **152** and the second stepped hole section **153.** The cover body **21** is accommodated by the stepped hole, and the second cover plate **211** surface sealingly mates with the stepped surface **154,** so that the sealingly mating parts can be shielded by the second stepped hole section **153,** reducing the risk of external impurities entering the sealingly mating parts.

Referring to Figs. **3A, 3B****,** **3C****,** **3H****,** **3J** and **3K****,** in some embodiments, the baffle **22** has a liquid drainage hole **221** penetrating in the thickness direction of the cover assembly **20,** and the liquid drainage hole **221** is located on an outer circumferential side of the cover plate **211.** The baffle **22** is provided with the liquid drainage hole **221** penetrating the baffle **22,** and the liquid drainage hole **221** is distributed on the outer circumferential side of the cover plate **211,** so that liquid can be discharged outwardly through the liquid drainage hole **221** in the baffle **22** when the actuation assembly **30** is actuated. In Fig. **3C****,** the liquid is discharged from the opening portion **13** through the liquid drainage hole **221** in the direction **z.**

In Figs. **3H****,** **3J** and **3K****,** a plurality of liquid drainage holes **221** are provided. The plurality of liquid drainage holes **221** are circumferentially arranged at intervals on the outer circumferential side of the cover plate **211,** which can make the liquid drainage more uniform, and even if there are impurities outside blocking some of the liquid drainage holes **221,** liquid drainage can be implemented through the other liquid drainage holes **221,** so that the liquid drainage function can be implemented normally.

In order to reduce the blocking of the cover assembly **20** and the influence on the sealing caused by external impurities, referring to Figs. **3A, 3B** and **3I****-3K,** in some embodiments, the cover assembly **20** further includes an engagement ring **24.** The engagement ring **24** is disposed at an outer edge of the baffle **22,** and is connected to or integrally formed with the baffle **22.** In Figs. **3B** and **3I**, the engagement ring **24** has a flange **241** protruding from the baffle **22** in a direction toward the actuation assembly **30.** The flange **241** of the engagement ring **24** disposed at the outer edge of the baffle **22** can create a shielding effect in the radial direction, which can reduce the blocking of the cover assembly **20** and the influence on the sealing caused by external impurities to a certain extent.

In some embodiments, the flange **241** may be disposed outside the mating portion **15.** In this way, the possibility of the valve body **10** being laterally collided by external structures can be reduced by shielding the valve body **10,** and it is also possible to block some external impurities to reduce the risk of the impurities blocking the liquid drainage channel.

In Figs. **3I** and **3J****,** the flange **241** has a liquid drainage notch **242.** The liquid drainage function can be implemented by providing the liquid drainage notch **242** on the flange **241.** There may be plurality of liquid drainage notches **242,** and the plurality of liquid drainage notches **242** are circumferentially arranged at intervals on the flange **241.** The arrangement of the plurality of liquid drainage notches **242** at intervals in the circumferential direction of the flange **241** can also implement a uniform liquid drainage function in the radial direction, and even if there are external impurities blocking some of the liquid drainage notches **242,** liquid drainage can be implemented through the other liquid drainage notches **242,** so that the liquid drainage function can be implemented normally.

The plurality of liquid drainage holes **221** in the baffle **22** are circumferentially arranged at intervals on an outer edge of the cover plate **211,** and can be alternately arranged with the plurality of liquid drainage notches **242** in the circumferential direction. The plurality of liquid drainage holes **221** penetrating in the thickness direction and the plurality of liquid drainage notches **242** on the flange **241** are alternately arranged in the circumferential direction, so that more uniform radial liquid drainage and circumferential liquid drainage can be implemented at various positions in the circumferential direction.

Referring to Fig. **3G****,** in some embodiments, the cover body **21** includes a cover plate **211** configured to cover the opening portion **13,** and a core connected to or integrally formed with the cover plate **211.** The core is located on a side of the cover plate **211** adjacent to the actuation assembly **30,** and has a liquid guide groove **214.** A surface of the core of the cover body **21** faces the actuation assembly **30,** and thus can abut against the actuation assembly **30** when the actuation assembly **30** is actuated and move under the push of the actuation assembly **30,** while the liquid guide groove **214** provided on the core can guide the liquid that enters the accommodating cavity **11** to be discharged outwardly through the liquid drainage channel between the cover plate **211** and the opening portion 13.

In Fig. **3G****,** the core includes a plurality of sub-cores **212,** and the plurality of sub-cores **212** are adjacent to each other to form the liquid guide groove **214.** The gaps between adjacent sub-cores **212** among the plurality of sub-cores **212** can form a plurality of liquid guide grooves **214** in the form of a flow channel, so that uniform outward liquid discharge can be implemented. The plurality of sub-cores **212** may be distributed on the outer side of the second fixing portion **D2** where the elastic connection member is mounted on the cover plate **211,** and are arranged at intervals in the circumferential direction. Each sub-core **212** may be in the shape of an annular sector, and on the side adjacent to the second fixing portion **D2,** an annular groove is used to communicate the liquid guide grooves **214** with each other.

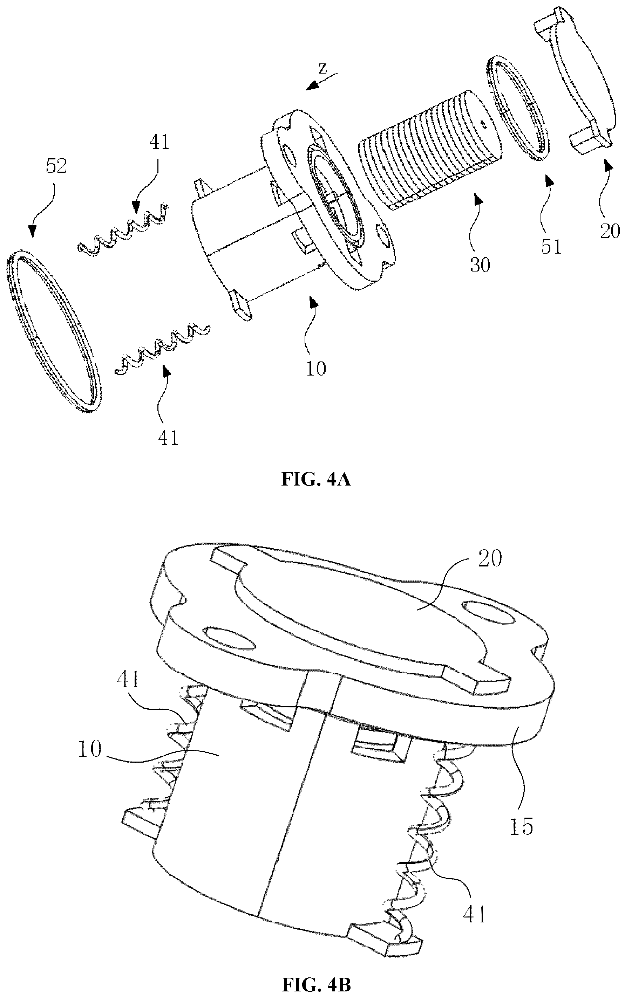

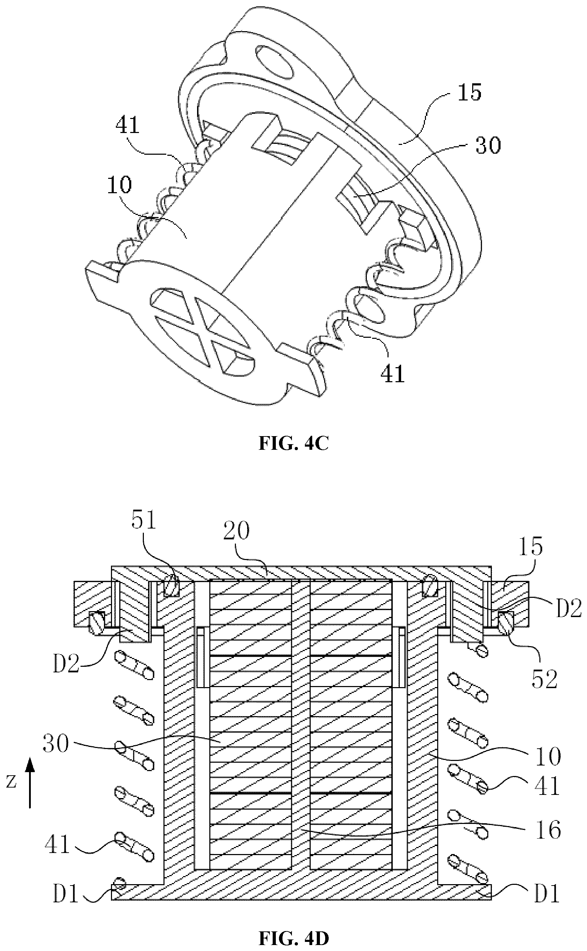

Fig. **4A** is a schematic structural exploded view of a second embodiment of a liquid drainage mechanism according to the present disclosure. Figs. **4B** and **4C** are respectively schematic perspective views of a mounting structure in the embodiment shown in Fig. **4A** from different viewing angles. Fig. **4D** is a schematic cross-sectional view of the mounting structure in the embodiment shown in Fig. **4A** in an unopened state.

Compared with the first embodiment of the liquid drainage mechanism of the present disclosure, referring to Figs. **4A-4D****,** the elastic connection member in the second embodiment also includes a tension spring **41.** The tension spring **41** may be disposed on the outer side of the valve body **10,** and a plurality of tension springs **41** may be provided, so as to apply more balanced pulling force to the cover assembly **20.** In Fig. **4D****,** the cover assembly **20** is provided with a second fixing portion **D2,** and the mating portion **15** of the valve body **10** that is formed by extending a preset size along a plane perpendicular to the direction z may be provided with a through hole for the second fixing portion **D2** to pass through. The valve body **10** is provided with an outwardly protruding first fixing portion **D1** at one end away from the opening portion. Two ends of the tension spring **41** may be respectively connected to the first fixing portion **D1** and the second fixing portion **D2,** so that the cover assembly **20** can stably maintain the state in which the opening portion of the valve body **10** is covered when the actuation assembly **30** is not actuated. In addition, the second fixing portion **20** also mates with the through hole in the mating portion **15** to implement guidance and anti-rotation of the cover assembly **20.**

In Figs. **4A** and **4D****,** the accommodating cavity of the valve body **10** may be further provided with a positioning post **16.** The positioning post **16** may pass through the through hole provided in the actuation assembly **30.** Grooves may be respectively provided at two ends of the mating portion **15** for mounting the first elastic sealing member **51** and the second elastic sealing member **52,** so as to form sealing mating between the valve body **10** and the cover assembly **20** and between the valve body **10** and the target member to which the liquid drainage mechanism is mounted. The other structures may refer to the aforementioned first embodiment and will not be described again here.

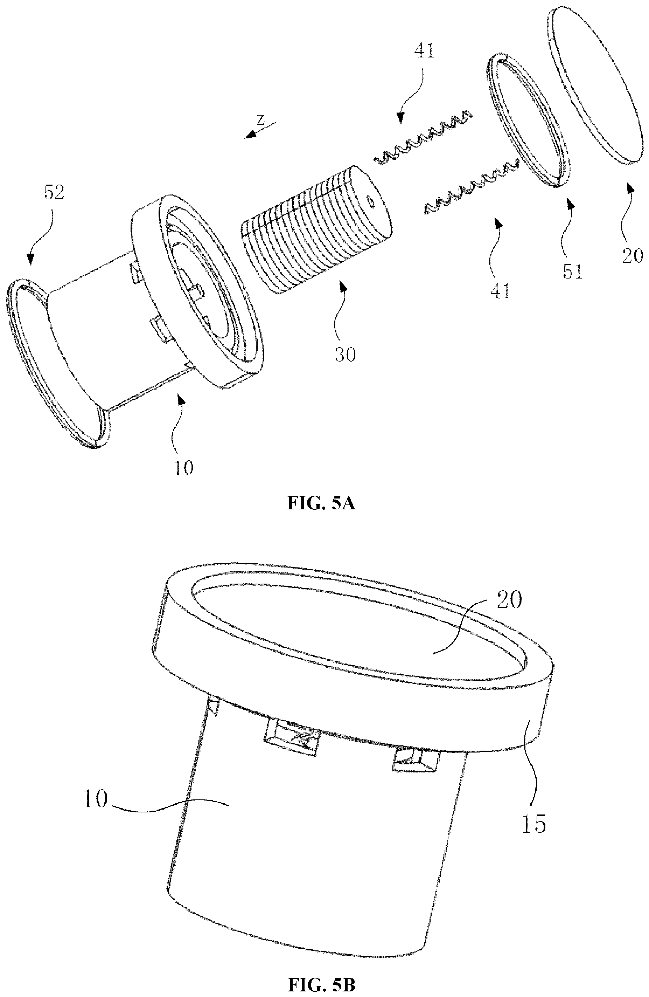

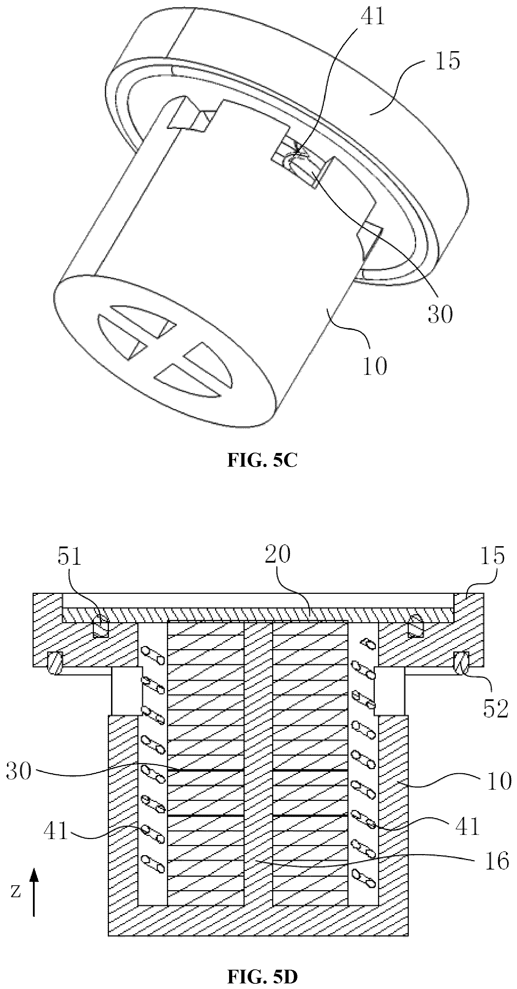

Fig. **5A** is a schematic structural exploded view of a third embodiment of a liquid drainage mechanism according to the present disclosure. Figs. **5B** and **5C** are respectively schematic perspective views of a mounting structure in the embodiment shown in Fig. **5A** from different viewing angles. Fig. **5D** is a schematic cross-sectional view of the mounting structure in the embodiment shown in Fig. **5A** in an unopened state.

Compared with the second embodiment of the liquid drainage mechanism of the present disclosure, referring to Figs. **5A-5D****,** the tension spring **41** in the third embodiment is located in the accommodating cavity of the valve body **10** and may be located between an outer wall of the actuation assembly **30** and an inner wall of the accommodating cavity. This can reduce the space occupied by the liquid drainage mechanism **72** and reduce the risk of other structures outside the liquid drainage mechanism **72** interfering with the elastic connection member. A plurality of tension springs **41** may be provided, so as to apply more balanced pulling force to the cover assembly **20.** Correspondingly, two ends of each tension spring **41** are respectively connected between the inner wall of the accommodating cavity of the valve body **10** and a surface on a side of the cover assembly **20** adjacent to the valve body. An annular groove is provided on the mating portion **15** of the valve body **10** that is formed by extending a preset size along a plane perpendicular to the direction **z,** and the cover assembly **20** is embedded in the annular groove.

In Figs. **5A** and **5D****,** the accommodating cavity of the valve body **10** may be further provided with a positioning post **16.** The positioning post **16** may pass through the through hole provided in the actuation assembly **30.** Grooves may be respectively provided at two ends of the mating portion **15** for mounting the first elastic sealing member **51** and the second elastic sealing member **52,** so as to form sealing mating between the valve body **10** and the cover assembly **20** and between the valve body **10** and the target member to which the liquid drainage mechanism is mounted. The other structures may refer to the aforementioned first embodiment and will not be described again here.

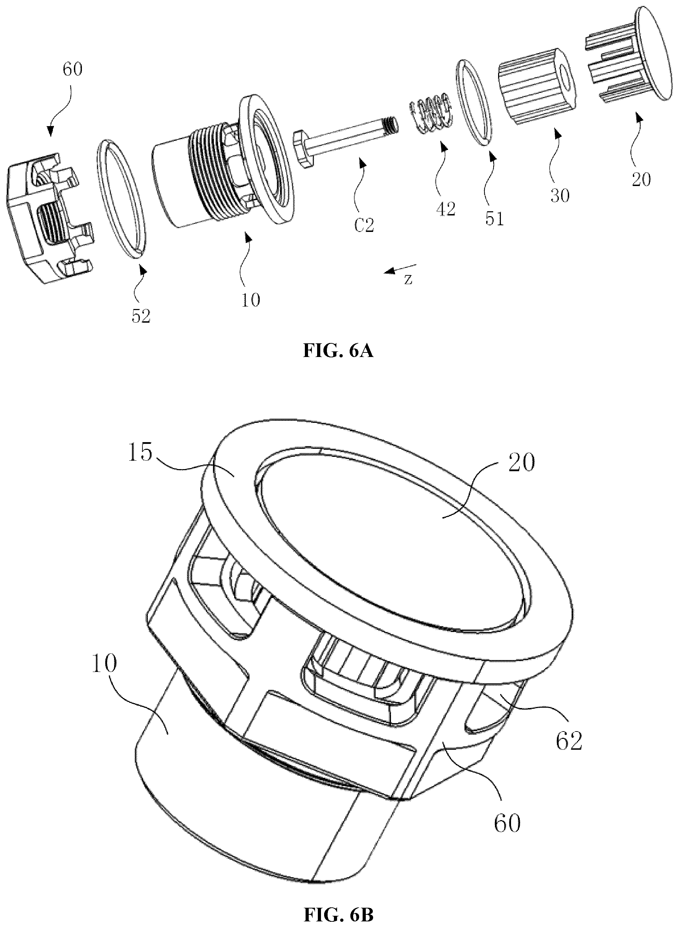

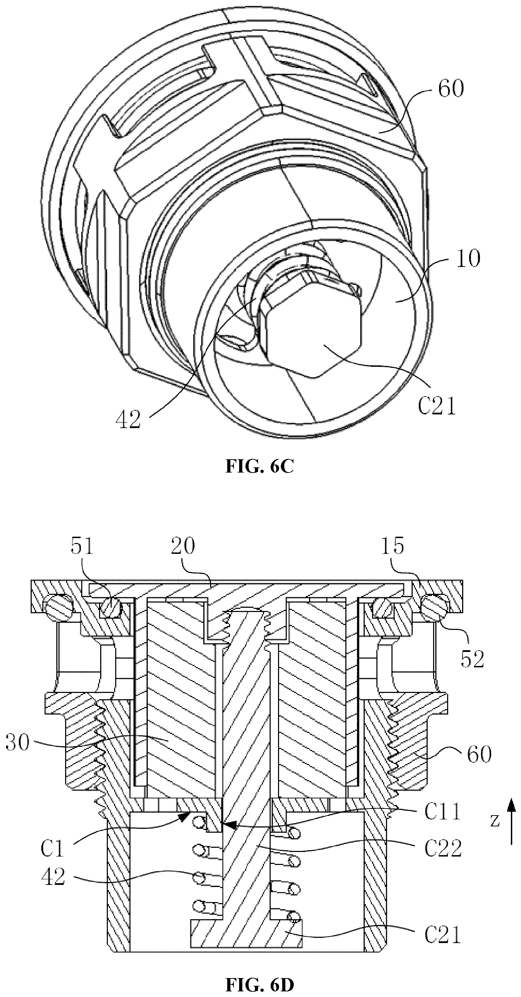

Fig. **6A** is a schematic structural exploded view of a fourth embodiment of a liquid drainage mechanism according to the present disclosure. Figs. **6B** and **6C** are respectively schematic perspective views of a mounting structure in the embodiment shown in Fig. **6A** from different viewing angles. Fig. **6D** is a schematic cross-sectional view of the mounting structure in the embodiment shown in Fig. **6A** in an unopened state.

Compared with the first embodiment of the liquid drainage mechanism of the present disclosure, referring to Figs. **6A-6D****,** the elastic connection member in the fourth embodiment is configured as a compression spring **42.** The valve body **10** includes a first pressing portion **C1,** the cover assembly **20** includes a second pressing portion **C2,** the first pressing portion **C1** and the second pressing portion **C2** are respectively located at two ends of the elastic connection member, and the cover assembly **20** is configured, when separated from the opening portion **13,** to cause the second pressing portion **C2** to move toward the first pressing portion **C1** and compress the elastic connection member.

Since the compression spring **42** is arranged between the first pressing portion **C1** of the valve body **10** and the second pressing portion **C2** of the cover assembly **20,** the compression spring **42** can stably press the cover assembly **20** against the opening portion **13** of the valve body **10** by means of an elastic force. When the cover assembly **20** is separated from the opening portion **13,** the compression spring is compressed, and its elastic force after compression can quickly restore the cover assembly **20** when the actuation assembly **30** is not actuated.

In Fig. **6D****,** the second pressing portion **C2** may include a pressing plate **C21** and a limiting rod **C22.** The first pressing portion **C1** includes a mounting hole **C11,** the pressing plate **C21** is connected to the limiting rod **C22,** the limiting rod **C22** is movably disposed through the mounting hole **C11,** and the elastic connection member is sleeved on the limiting rod **C22** and clamped between the pressing plate **C21** and the second pressing portion **C2.** The first pressing portion **C1** includes a pressing plate **C21** and a limiting rod **C22** passing through the mounting hole **C11** in the second pressing portion **C2,** and the compression spring **42** is sleeved on the limiting rod **C22** and is clamped between the pressing plate **C21** and the second pressing portion **C2,** so that when the second pressing portion **C2** and the pressing plate **C21** move toward each other, the length of the elastic connection member is compressed, and the elastic connection member makes the second pressing portion **C2** and the pressing plate **C21** tend to move away from each other to implement rapid restoring of the cover assembly **20.**

In order to facilitate the assembly of the liquid drainage mechanism **72,** referring to Fig. **6D****,** in some embodiments, the cover assembly **20** further includes a cover body **21,** and the limiting rod **C12** is removably connected to the cover body **21.** For example, the limiting rod **C12** is fixedly connected to the cover body **21** by means of threads. The cover assembly **20** adopts a structure in which the cover body **21** is removable from the limiting rod **C12,** so that the cover body **21** and the limiting rod **C12** may be manufactured separately and then assembled, thereby reducing the difficulty of manufacturing and also facilitating component replacement and maintenance.

An annular groove is provided on the mating portion **15** of the valve body **10** that is formed by extending a preset size along a plane perpendicular to the direction z, and the cover assembly **20** is embedded in the annular groove. In Figs. **6A** and **6D****,** grooves may be respectively provided at two ends of the mating portion **15** for mounting the first elastic sealing member **51** and the second elastic sealing member **52,** so as to form sealing mating between the valve body **10** and the cover assembly **20** and between the valve body **10** and the target member to which the liquid drainage mechanism is mounted. The other structures may refer to the aforementioned first embodiment and will not be described again here.

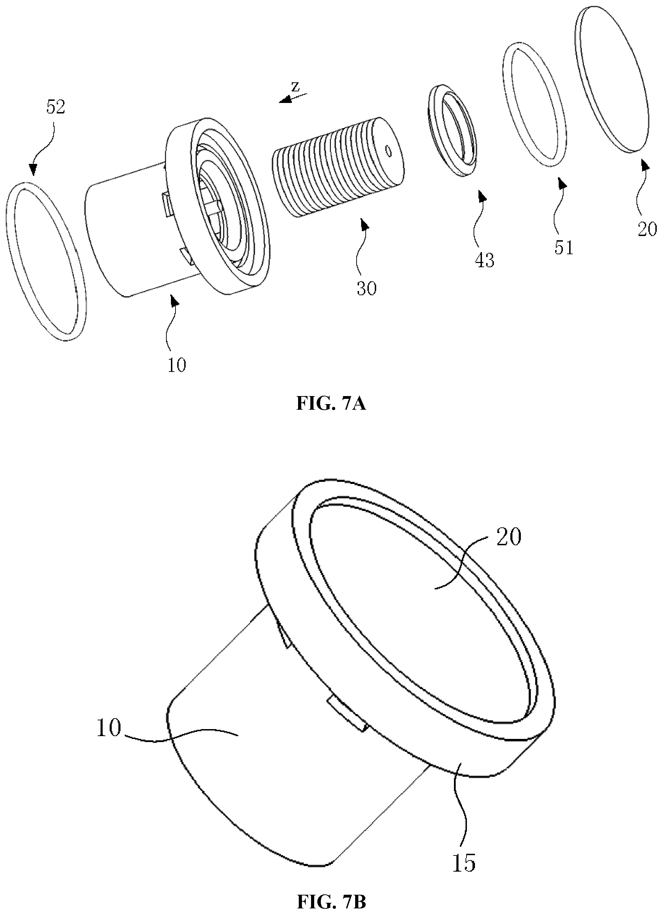

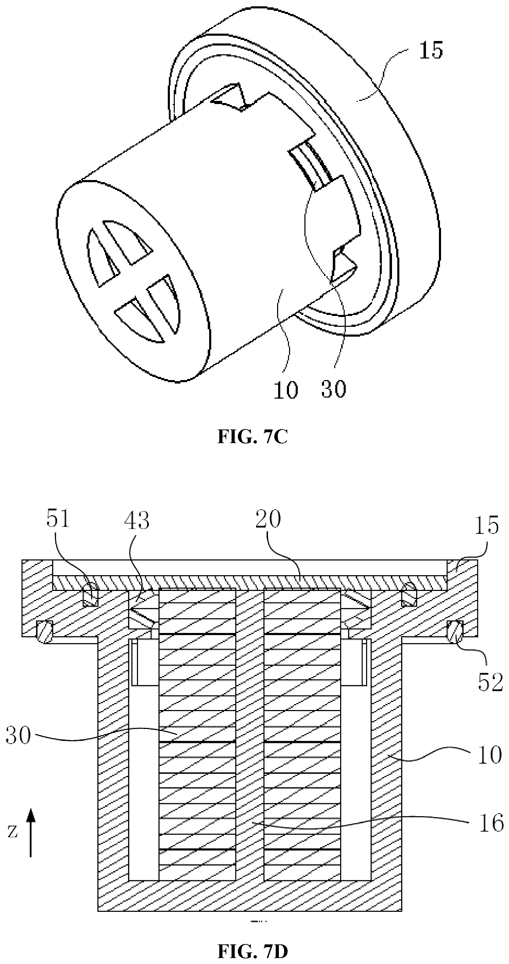

Fig. **7A** is a schematic structural exploded view of a fifth embodiment of a liquid drainage mechanism according to the present disclosure. Figs. **7B** and **7C** are respectively schematic perspective views of a mounting structure in the embodiment shown in Fig. **7A** from different viewing angles. Fig. **7D** is a schematic cross-sectional view of the mounting structure in the embodiment shown in Fig. **7A** in an unopened state.

Compared with the first embodiment of the liquid drainage mechanism of the present disclosure, referring to Figs. **7A-7D****,** the elastic connection member includes a disc spring **43.** The disc spring **43** occupies less space while satisfying the elastic force, and can achieve a smaller-sized liquid drainage mechanism **72.** The disc spring **43** is located in the accommodating cavity **11,** thereby effectively reducing the space occupied by the liquid drainage mechanism **72** and reducing the risk of other structures outside the liquid drainage mechanism **72** interfering with the elastic connection member.

In Fig. **7D****,** the valve body **10** includes a limiting protrusion **112** disposed on the wall of the accommodating cavity **11,** and the disc spring **43** is clamped between the limiting protrusion **112** and the cover assembly **20.** The disc spring **43** can provide a reliable and stable elastic force between the valve body **10** and the cover assembly **20** and occupy less space.

An annular groove is provided on the mating portion **15** of the valve body **10** that is formed by extending a preset size along a plane perpendicular to the direction **z,** and the cover assembly **20** is embedded in the annular groove. In Figs. **5A** and **5D****,** the accommodating cavity of the valve body **10** may be further provided with a positioning post **16.** The positioning post **16** may pass through the through hole provided in the actuation assembly **30.** Grooves may be respectively provided at two ends of the mating portion **15** for mounting the first elastic sealing member **51** and the second elastic sealing member **52,** so as to form sealing mating between the valve body **10** and the cover assembly **20** and between the valve body **10** and the target member to which the liquid drainage mechanism is mounted. The other structures may refer to the aforementioned first embodiment and will not be described again here.

In some other embodiments, the elastic connection member includes a disc spring **43,** and the valve body **10** includes a first limiting protrusion and a second limiting protrusion disposed spaced apart from each other on a wall of the accommodating cavity **11,** and the elastic connection member is clamped between the first limiting protrusion and the second limiting protrusion. The disc spring can be stably held by the first limiting protrusion and the second limiting protrusion disposed spaced apart from each other, so that the elastic connection member can reliably provide elastic force, so that less space can be occupied while satisfying the elastic force, and a smaller-sized liquid drainage mechanism can be achieved.

The cover body **21** of the cover assembly **20** may have an extension section and a hook section. The extension section extends from the cover body **21** toward the accommodating cavity **11,** and the hook section is located on the extension section and is configured to abut against an end face of the elastic connection member that faces away from the opening portion **13.** The hook section can stably abut against the end face of the elastic connection member through the elasticity of the extension section, and is easy to assemble.

The structure of an embodiment of the liquid drainage mechanism will be described below with reference to Figs. **3A** to **3L****.**

In Fig. **3A****,** the liquid drainage mechanism **72** includes a valve body **10,** a cover assembly **20,** an actuation assembly **30,** a tension spring **41,** a first elastic sealing member **51,** a second elastic sealing member **52,** and a fixing member **60.** In Figs. **3B** and **3D****,** the valve body **10** is provided with an accommodating cavity **11,** a liquid intake portion **12** and an opening portion **13.** The liquid intake portion **12** and the opening portion **13** are both in communication with the accommodating cavity **11.** The liquid intake portion **12** includes a liquid intake hole **122** provided in a wall of the accommodating cavity **11** and two liquid inlets **121** disposed spaced apart from each other. The cover assembly **20** is movably disposed on the opening portion **13** in the direction **z.**

In Figs. **3B** and **3E****,** the actuation assembly **30** is disposed in the accommodating cavity **11** and can absorb liquid and expand. The actuation assembly **30** includes a plurality of sheet-shaped deformable members **32,** and the deformable members **32** are stacked in a thickness direction thereof. Each deformable member **32** is provided with a through hole **31** for communicating the liquid inlet **121** with the opening portion **13,** and a plurality of grooves **33** provided on the periphery of the deformable member **32.**

In Figs. **3B****,** **3G** and **3J****,** the elastic connection member is located in the accommodating cavity **11** and disposed through the through hole **31.** The valve body **10** includes a first fixing portion **D1** located at a bottom wall of the accommodating cavity **11.** The cover assembly **20** includes a second fixing portion **D2** disposed opposite to the first fixing portion **D1,** and two ends of the elastic connection member are respectively connected to the first fixing portion **D1** and the second fixing portion **D2,** such that when the cover assembly **20** is separated from the opening portion **13,** the second fixing portion **D2** can move in a direction away from the first fixing portion **D1** to stretch the elastic connection member.

The first fixing portion **D1** is configured as a partition strip that separates the two liquid inlets **121.** The elastic connection member is provided with a first hook at one end close to the first fixing portion **D1,** and the first hook hooks the partition strip to connect the valve body **10** to the elastic connection member.

The second fixing portion **D2** is formed by protruding from the surface of the cover assembly **20** that faces the accommodating cavity **11,** a second hook is provided at one end of the elastic connection member close to the second fixing portion **D2,** the second fixing portion **D2** is provided with a hanging hole, and the second hook hooks the hanging hole to connect the cover assembly **20** to the elastic connection member.

In Figs. **3B** and **3L****,** the fixing member **60** is configured to fix the valve body **10** to a target member (e.g., the bottom plate of the battery box). An outer wall of the valve body **10** includes a threaded section **14** extending in a first direction, and a mating portion **15** formed by extending a preset size along a plane perpendicular to the first direction, the mating portion **15** is located at one end of the threaded section **14** in a screwing direction, and the fixing member **60** includes a fixing nut configured to be locked to the outer wall by means of the threads and form a clamping space together with the mating portion **15.** A circumferential side wall of the fixing member **60** has a water intake notch **62,** and the liquid intake hole **122** is in communication with the water intake notch **62.**

In Figs. **3B** and **3F****-3K,** the cover assembly **20** includes a cover body **21** and a baffle **22.** The baffle **22** is disposed on a side of the cover body **21** away from the valve body **10** and is connected to the cover body **21.** A buffer cavity **23** is formed between the cover body **21** and the baffle **22.** The cover body **21** includes a cover plate **211.** A first cover plate surface **S2** on a side of the cover plate **211** adjacent to the baffle **22** has an inner recess **231.** A baffle surface **S3** is flat, and the material of the baffle **22** has a higher strength than the material of the cover body **21.**

In Fig. **3J****,** the wall of the accommodating cavity **11** is provided with a guide groove **111,** and the cover body **21** further includes a guide post **213** formed by protruding toward the accommodating cavity **11,** the guide post **213** mates with the guide groove **111** for guidance when the cover body 21 covers the opening portion **13,** so as to limit a rotation angle of the cover plate **211** relative to the valve body **10.**

In Figs. **3B** and **3D****,** the outer wall **14** of the valve body **10** includes a mating portion **15** formed by extending a preset size along a plane perpendicular to the thickness direction of the baffle **22.** The mating portion **15** includes a first stepped hole section **152** and a second stepped hole section **153.** A cross-sectional size of the second stepped hole section **153** is greater than a cross-sectional size of the first stepped hole section **152.** The cover plate **211** is configured to be at least partially located in the second stepped hole section **153** when the actuation assembly **30** is not actuated, such that a second cover plate **211** surface on a side of the cover plate **211** adjacent to the actuation assembly **30** sealingly mates with a stepped surface **154** between the first stepped hole section **152** and the second stepped hole section **153** by means of the first elastic sealing ring **51.** When the valve body **10** is connected to the fixing portion, the mating portion **15** sealingly mates with the target member by means of the second elastic sealing ring **52.**

In Fig. **3J****,** the baffle **22** has a plurality of liquid drainage holes **221** penetrating in the thickness direction of the cover assembly **20.** The plurality of liquid drainage holes **221** are circumferentially arranged at intervals on an outer circumferential side of the cover plate **211.** The cover assembly **20** further includes an engagement ring **24** disposed at an outer edge of the baffle **22.** The engagement ring **24** has a flange **241** protruding from the baffle **22** in a direction toward the actuation assembly **30,** and the flange **241** is located outside the mating portion **15.** The flange **241** has a plurality of liquid drainage notches **242,** and the plurality of liquid drainage notches **242** are circumferentially arranged at intervals on the flange **241.** The plurality of liquid drainage holes **221** and the plurality of liquid drainage notches **242** are alternately arranged in the circumferential direction.

In Figs. **3G** and **3J****,** the cover body **21** further includes a core. The core is connected to the cover plate **211** and located on a side of the cover plate **211** adjacent to the actuation assembly **30,** and the core has a liquid guide groove **214.** The core includes a plurality of sub-cores **212,** and the plurality of sub-cores **212** are adjacent to each other to form the liquid guide groove **214.**

Based on the foregoing various embodiments of the liquid drainage mechanism of the present disclosure, the present disclosure also provides a battery box using the foregoing embodiments of the liquid drainage mechanism. The battery box further includes a box body for accommodating a battery cell. The liquid drainage mechanism is located at a lower portion of the box body. By disposing the liquid drainage mechanism at the lower portion of the box, the liquid in the box body can flow to the lower portion of the box body under the action of gravity, so that the liquid in the box body is quickly discharged by using the liquid drainage mechanism.

Based on the foregoing various embodiments of the liquid drainage mechanism or the foregoing various embodiments of the battery box of the present disclosure, the present disclosure also provides a battery using the foregoing embodiments of the liquid drainage mechanism or the foregoing embodiments of the battery box. This can improve the use reliability and safety of the battery. The battery may further include a battery cell and a thermal management member which are disposed in the box body. The thermal management member is configured for heat exchange with the battery cell. Liquid generated or leaked during the use of the thermal management member disposed in the box body can be quickly discharged through the liquid drainage mechanism.

In some embodiments, a plurality of thermal management members are provided. When a plurality of thermal management members are provided in the box body, each thermal management member has a plurality of joints when mounted and connected. The liquid drainage mechanism can discharge a liquid working medium leaked from the joints out of the battery, thereby improving the use reliability and safety of the battery.

The battery cell has a terminal post located at a lower portion or a side portion of the battery cell. Where the terminal post of the battery cell is disposed at the lower portion or the side portion of the battery cell, the liquid drainage mechanism can quickly discharge the liquid, thereby reducing the risk of short circuits caused by the liquid contacting the terminal post.

In one aspect of the present disclosure, provided is an electrical device, including a battery as described above. The electrical device using the battery as described above can achieve a better use reliability and safety.

While the present disclosure has been described with reference to the preferred embodiments, various modifications may be made and components therein may be replaced with equivalents without departing from the scope of the present disclosure. In particular, the technical features mentioned in the various examples can be combined in any manner as long as there is no structural conflict. The present disclosure is not limited to the specific embodiments disclosed herein, but rather includes all technical solutions falling within the scope of the claims.

## Claims

1. A liquid drainage mechanism (**72**), comprising:
a valve body (**10**), the valve body (**10**) provided with an accommodating cavity (**11**), a liquid intake portion (**12**) and an opening portion (**13**), the liquid intake portion (**12**) and the opening portion (**13**) both in communication with the accommodating cavity (**11**);
a cover assembly (**20**) movably disposed on the opening portion (**13**); and
an actuation assembly (**30**) disposed in the accommodating cavity (**11**), the actuation assembly (**30**) configured to be actuated in response to a liquid entering the accommodating cavity (**11**) through the liquid intake portion (**12**), so as to move the cover assembly (**20**) to at least partially open the opening portion (**13**).

2. The liquid drainage mechanism (**72**) according to claim **1,** wherein the cover assembly (**20**) comprises an action surface (**S1**), and the actuation assembly (**30**) is configured to push the action surface (**S1**) upon actuation, so as to move the cover assembly (**20**) to at least partially open the opening portion (**13**).

3. The liquid drainage mechanism (**72**) according to claim **2,** wherein the actuation assembly (**30**) is configured to push the action surface (**S1**) upon actuation, so as to move the cover assembly (**20**) in a direction away from the opening portion (**13**).

4. The liquid drainage mechanism (**72**) according to any one of claims **1** to **3,** wherein the actuation assembly (**30**) comprises a deformable member (**32**), the deformable member (**32**) configured to expand and deform after contact with the liquid.

5. The liquid drainage mechanism (**72**) according to claim **4,** wherein the deformable member (**32**) is configured to absorb the liquid and expand.

6. The liquid drainage mechanism (**72**) according to any one of claims **4** to **5,** wherein the deformable member (**32**) comprises a groove (**33**) and/or a through hole (**31**) for communicating the liquid intake portion (**12**) with the opening portion (**13**).

7. The liquid drainage mechanism (**72**) according to any one of claims **4** to **6,** wherein a plurality of deformable members (**32**) are provided and configured in a sheet shape, the plurality of sheet-shaped deformable members (**32**) being stacked in their thickness direction.

8. The liquid drainage mechanism (**72**) according to any one of claims **4** to **7,** wherein the deformable member (**32**) comprises an electrical insulating paper.

9. The liquid drainage mechanism (**72**) according to any one of claims **4** to **7,** wherein a volume of an alcoholic liquid that can be absorbed by the deformable member (**32**) per unit volume is a first absorption amount, and a volume of water that can be absorbed by the deformable member (**32**) per unit volume is a second absorption amount, the first absorption amount being greater than the second absorption amount.

10. The liquid drainage mechanism (**72**) according to any one of claims **4** to **7** and **9,** wherein a volume change ratio of the deformable member (**32**) when absorbing a unit volume of alcoholic liquid is defined as a first volume deformation ratio, and a volume deformation ratio of the deformable member (**32**) when absorbing a unit volume of water is defined as a second volume deformation ratio, the first volume deformation ratio being greater than the second volume deformation ratio.

11. The liquid drainage mechanism (**72**) according to any one of claims **1** to **10,** further comprising a connection structure connected to the valve body (**10**) and the cover assembly (**20**), the connection structure configured to keep the cover assembly (**20**) covering the opening portion (**13**) when the actuation assembly (**30**) is not actuated.

12. The liquid drainage mechanism (**72**) according to claim **11,** wherein the connection structure comprises an elastic connection member configured to elastically deform when the cover assembly (**20**) opens the opening portion (**13**).

13. The liquid drainage mechanism (**72**) according to claim **12,** wherein the elastic connection member is configured as a compression spring (**42**), the valve body (**10**) comprises a first pressing portion (**C1**), the cover assembly (**20**) comprises a second pressing portion (**C2**), the first pressing portion (**C1**) and the second pressing portion (**C2**) are respectively located at two ends of the elastic connection member, and the cover assembly (**20**) is configured, when separated from the opening portion (**13**), to cause the second pressing portion (**C2**) to move toward the first pressing portion (**C1**) and compress the elastic connection member.

14. The liquid drainage mechanism (**72**) according to claim **13,** wherein the second pressing portion (**C2**) comprises a pressing plate (**C21**) and a limiting rod (**C22**), the first pressing portion (**C1**) comprises a mounting hole (**C11**), the pressing plate (**C21**) is connected to the limiting rod (**C22**), the limiting rod (**C22**) is movably disposed through the mounting hole (**C11**), and the elastic connection member is sleeved on the limiting rod (**C22**) and clamped between the pressing plate (**C21**) and the second pressing portion (**C2**).

15. The liquid drainage mechanism (**72**) according to claim **14,** wherein the cover assembly (**20**) further comprises a cover body (**21**), and the limiting rod (**C12**) is removably connected to the cover body (**21**).

16. The liquid drainage mechanism (**72**) according to claim **12,** wherein the elastic connection member is located in the accommodating cavity (**11**).

17. The liquid drainage mechanism (**72**) according to claim **16,** wherein the elastic connection member comprises a disc spring (**43**), the valve body (**10**) comprises a limiting protrusion (**112**) disposed spaced apart on a wall of the accommodating cavity (**11**), and the elastic connection member is clamped between the limiting protrusion (**112**) and the cover assembly (**20**).

18. The liquid drainage mechanism (**72**) according to claim **16,** wherein the elastic connection member comprises a disc spring (**43**), and the valve body (**10**) comprises a first limiting protrusion and a second limiting protrusion disposed spaced apart from each other on a wall of the accommodating cavity (**11**), and the elastic connection member is clamped between the first limiting protrusion and the second limiting protrusion.

19. The liquid drainage mechanism (**72**) according to claim **18,** wherein the cover assembly (**20**) further comprises a cover body (**21**), the cover body (**21**) having an extension section and a hook section, wherein the extension section extends from the cover body (**21**) toward the accommodating cavity (**11**), and the hook section is located on the extension section and is configured to abut against an end face of the elastic connection member that faces away from the opening portion (**13**).

20. The liquid drainage mechanism (**72**) according to claim **12,** wherein the elastic connection member comprises a tension spring (**41**), the valve body (**10**) comprises a first fixing portion (**D1**), the cover assembly (**20**) comprises a second fixing portion (**D2**), and two ends of the elastic connection member are respectively connected to the first fixing portion (**D1**) and the second fixing portion (**D2**), such that when the cover assembly (**20**) is separated from the opening portion (**13**), the second fixing portion (**D2**) can move in a direction away from the first fixing portion (**D1**) to stretch the elastic connection member.

21. The liquid drainage mechanism (**72**) according to claim **20,** wherein the elastic connection member is located in the accommodating cavity (**11**), the actuation assembly (**30**) is provided with a through hole (**31**), and the elastic connection member is disposed through the through hole (**31**).

22. The liquid drainage mechanism (**72**) according to claim **20** or **21,** wherein the first fixing portion (**D1**) is located on a bottom wall of the accommodating cavity (**11**), the second fixing portion (**D2**) is located on a surface of the cover assembly (**20**) that faces the accommodating cavity (**11**), and the first fixing portion (**D1**) and the second fixing portion (**D2**) are disposed opposite to each other in a penetration direction of the through hole (**31**).

23. The liquid drainage mechanism (**72**) according to any one of claims **20** to **22,** wherein the liquid intake portion (**12**) comprises two liquid inlets (**121**) disposed spaced apart from each other, the first fixing portion (**D1**) is configured as a partition strip for separating the two liquid inlets (**121**), the elastic connection member is provided with a first hook at one end close to the first fixing portion (**D1**), and the first hook hooks the partition strip to connect the valve body (**10**) to the elastic connection member.

24. The liquid drainage mechanism (**72**) according to claim **23,** wherein the second fixing portion (**D2**) is formed by protruding from the surface of the cover assembly (**20**) that faces the accommodating cavity (**11**), a second hook is provided at one end of the elastic connection member close to the second fixing portion (**D2**), the second fixing portion (**D2**) is provided with a hanging hole, and the second hook hooks the hanging hole to connect the cover assembly (**20**) to the elastic connection member.

25. The liquid drainage mechanism (**72**) according to any one of claims **1** to **24,** further comprising a fixing member (**60**), wherein the fixing member (**60**) is configured to fix the valve body (**10**) to a target member.

26. The liquid drainage mechanism (**72**) according to claim **25,** wherein an outer wall of the valve body (**10**) comprises a threaded section (**14**) extending in a first direction, and a mating portion (**15**) formed by extending a preset size along a plane perpendicular to the first direction, the mating portion (**15**) is located at one end of the threaded section (**14**) in a screwing direction, and the fixing member (**60**) comprises a fixing nut configured to be locked to the outer wall by means of the threads and form a clamping space together with the mating portion (**15**).

27. The liquid drainage mechanism (**72**) according to any one of claims **1** to **26,** wherein the opening portion (**13**) comprises a first groove (**131**), a first elastic sealing member (**51**) is provided in the first groove (**131**), and at least a part of the cover assembly (**20**) is located in the first groove (**131**) when the actuation assembly (**30**) is not actuated.

28. The liquid drainage mechanism (**72**) according to any one of claims **1** to **27,** wherein the cover assembly (**20**) has an energy-absorbing structure.

29. The liquid drainage mechanism (**72**) according to claim **28,** wherein the energy-absorbing structure comprises a buffer cavity (**23**) located in the cover assembly (**20**).

30. The liquid drainage mechanism (**72**) according to claim **29,** wherein the cover assembly (**20**) comprises:
a cover body (**21**) and a baffle (**22**), the baffle (**22**) disposed on a side of the cover body (**21**) away from the valve body (**10**) and connected to or integrally formed with the cover body (**21**);
wherein the buffer cavity (**23**) is located between the cover body (**21**) and the baffle (**22**).

31. The liquid drainage mechanism (**72**) according to claim **30,** wherein the cover body (**21**) comprises:
a cover plate (**211**), a first cover plate surface (**S2**) on a side of the cover plate (**211**) adjacent to the baffle (**22**) having an inner recess (**231**);
wherein a baffle surface (**S3**) on a side of the baffle (**22**) adjacent to the cover plate (**211**) and the inner recess (**231**) enclose the buffer cavity (**23**).

32. The liquid drainage mechanism (**72**) according to claim **31,** wherein the wall of the accommodating cavity (**11**) is provided with a guide groove (**111**), and the cover body (**21**) further comprises a guide post (**213**) formed by protruding toward the accommodating cavity (**11**), the guide post (**213**) mates with the guide groove (**111**) for guidance when the cover body (**21**) covers the opening portion (**13**), so as to limit a rotation angle of the cover plate (**211**) relative to the valve body (**10**).

33. The liquid drainage mechanism (**72**) according to any one of claims **31** to **32,** wherein the baffle surface (**S3**) is flat.

34. The liquid drainage mechanism (**72**) according to any one of claims **30** to **33,** wherein the material of the baffle (**22**) has a higher strength than the material of the cover body (**21**).

35. The liquid drainage mechanism (**72**) according to any one of claims **31** to **34,** wherein an outer wall (**14**) of the valve body (**10**) comprises a mating portion (**15**) formed by extending a preset size along a plane perpendicular to a thickness direction of the baffle (**22**), the mating portion (**15**) comprises a first stepped hole section (**152**) and a second stepped hole section (**153**), a cross-sectional size of the second stepped hole section (**153**) is greater than a cross-sectional size of the first stepped hole section (**152**), and the cover plate (**211**) is configured to be at least partially located in the second stepped hole section (**153**) when the actuation assembly (**30**) is not actuated, such that a second cover plate (**211**) surface on a side of the cover plate (**211**) adjacent to the actuation assembly (**30**) sealingly mates with a stepped surface (**154**) between the first stepped hole section (**152**) and the second stepped hole section (**153**).

36. The liquid drainage mechanism (**72**) according to claim **35,** wherein the baffle (**22**) has a liquid drainage hole (**221**) penetrating in a thickness direction of the cover assembly (**20**), the liquid drainage hole (**221**) located on an outer circumferential side of the cover plate (**211**).

37. The liquid drainage mechanism (**72**) according to claim **36,** wherein a plurality of liquid drainage holes (**221**) are provided, and the plurality of liquid drainage holes (**221**) are circumferentially arranged at intervals on the outer circumferential side of the cover plate (**211**).

38. The liquid drainage mechanism (**72**) according to any one of claims **30** to **37,** wherein the cover assembly (**20**) further comprises:
an engagement ring (**24**) disposed at an outer edge of the baffle (**22**) and connected to or integrally formed with the baffle (**22**);
wherein the engagement ring (**24**) has a flange (**241**) protruding from the baffle (**22**) in a direction toward the actuation assembly (**30**).

39. The liquid drainage mechanism (**72**) according to claim **38,** wherein an outer wall (**14**) of the valve body (**10**) comprises a mating portion (**15**) formed by extending a preset size along a plane perpendicular to a thickness direction of the baffle (**22**), and the flange (**241**) is located outside the mating portion (**15**).

40. The liquid drainage mechanism (**72**) according to claim **39,** wherein the flange (**241**) has a liquid drainage notch (**242**).

41. The liquid drainage mechanism (**72**) according to claim **40,** wherein a plurality of liquid drainage notches (**242**) are provided, and the plurality of liquid drainage notches (**242**) are circumferentially arranged at intervals on the flange (**241**).

42. The liquid drainage mechanism (**72**) according to claim **41,** wherein the baffle (**22**) has a plurality of liquid drainage holes (**221**) penetrating in the thickness direction of the baffle (**22**); and the plurality of liquid drainage holes (**221**) are circumferentially arranged at intervals on an outer edge of the cover plate (**211**), and are alternately arranged with the plurality of liquid drainage notches (**242**) in a circumferential direction.

43. The liquid drainage mechanism (**72**) according to any one of claims **30** to **42,** wherein the cover body (**21**) comprises:
a cover plate (**211**) configured to cover the opening portion (**13**); and
a core connected to or integrally formed with the cover plate (**211**) and located on a side of the cover plate (**211**) adjacent to the actuation assembly (**30**), the core having a liquid guide groove (**214**).

44. The liquid drainage mechanism (**72**) according to claim **43,** wherein the core comprises a plurality of sub-cores (**212**), and the plurality of sub-cores (**212**) are adjacent to each other to form the liquid guide groove (**214**).

45. The liquid drainage mechanism (**72**) according to any one of claims **1** to **44,** further comprising a fixing member (**60**), the fixing member (**60**) configured to fix the valve body (**10**) to a target member;
wherein a circumferential side wall of the fixing member (**60**) has a water intake notch (**62**), the liquid intake portion (**12**) comprises a liquid intake hole (**122**) provided in a wall of the accommodating cavity (**11**), and the liquid intake hole (**122**) is in communication with the water intake notch (**62**).

46. A battery box (**70**), comprising:
a box body (**71**) configured to accommodate a battery cell (**81**); and
a liquid drainage mechanism (**72**) of any one of claims **1** to **45,** which is located at a lower portion of the box body (**71**).

47. A battery (**80**), comprising:
a liquid drainage mechanism (**72**) of any one of claims **1** to **45;** or
a battery box (**70**) of any one of claim **46.**

48. The battery (**80**) according to claim **47,** further comprising:
a battery cell (**81**) disposed in the box body (**71**); and
a thermal management member (**82**) disposed in the box body (**71**) and configured for heat exchange with the battery cell (**81**).

49. The battery (**80**) according to claim **48,** wherein a plurality of thermal management members (**82**) are provided.

50. The battery (**80**) according to claim **48** or **49,** wherein the battery cell (**81**) has a terminal post located at a lower portion or a side portion of the battery cell (**81**).

51. An electrical apparatus, comprising:
a battery (**80**) of any one of claims **47** to **50,** the battery (**80**) configured to supply electric energy.
